# EUROPEAN PATENT APPLICATION

(11) **EP 4 808 110 A1**
(43) Date of publication of application: **16.09.2026**
(21) Application number: 26159504.5
(22) Date of filing: 19.02.2026
(51) Int. Cl.: H04N 7/14, H04N 7/15, H04L 65/403

(54) **COMMUNICATION SYSTEM, INFORMATION PROCESSING APPARATUS, DISPLAY CONTROL METHOD, AND CARRIER MEANS**

(30) Priority: 14.03.2025 JP 2025041861
(71) Applicant: Ricoh Company, Ltd., Tokyo 143-8555 (JP)
(72) Inventor: Hasegawa, Takashi, Tokyo, 143-8555 (JP); Homma, Takeshi, Tokyo, 143-8555 (JP)
(74) Representative: Marks & Clerk LLP

(57) **Abstract**

A communication system (1) comprising:
a first information processing apparatus (30, 30A) to participate in communication; and
a second information processing apparatus (30, 30B) to participate in the communication,
the first information processing apparatus (30, 30A) including:
a first communication unit (31) configured to receive a wide-view image captured by an image capturing apparatus, in a case where the first information processing apparatus (30, 30A) starts participating in the communication;
a first acceptance unit (32) configured to accept, from an operation unit, an operation for specifying a predetermined area included in the wide-view image; and
a first display control unit (33) configured to cause a first display unit to display the predetermined area specified through the accepted operation, wherein
the first communication unit (31) is configured to transmit first point-of-view information for specifying the predetermined area after the operation is accepted,

the second information processing apparatus (30, 30B) including:
a second communication unit (31) configured to receive the wide-view image captured by the image capturing apparatus and second point-of-view information, in a case where the second information processing apparatus (30, 30B) starts participating in the communication after the communication has already started, the second point-of-view information being based on the first point-of-view information of the first information processing apparatus (30, 30A) participating in the communication; and
a second display control unit (33) configured to cause a second display unit to display the predetermined area specified by the received second point-of-view information in the wide-view image.

## Description

### BACKGROUND

### Technical Field

The present disclosure relates to a communication system, an information processing apparatus, a display control method, and carrier means.

### Related Art

A communication system in the related art transmits images and audio from one site to one or more other sites in real time to allow users at remote locations to perform remote communication using the images and audio. A known example of such an image is a wide-view image having a wide viewing angle and captured in a wide imaging range as an imaging range including even an area that is difficult for a normal angle of view to cover. Examples of the wide-view image include a 360-degree image that is a captured image of the entire 360-degree surroundings. The 360-degree image is also referred to as a spherical image, an omnidirectional image, or an "all-around" image. A user operates a communication terminal to change a virtual point of view for an image that is part of a wide-view image displayed on a display screen of the communication terminal. As a result, the user can view an area that is part of the wide-view image from any virtual point of view.

Japanese Unexamined Patent Application Publication No. 2023-121636 describes a remote communication system. In the remote communication system, when a predetermined one of participants who have already participated in a conference changes a point of view, points of view displayed to the other participants are synchronized with the changed point of view.

In the related art, however, a wide-view image is displayed on a communication terminal of a participant who starts participating in communication after the communication has already started, without consideration given to an area of the wide-view image that is being displayed on a communication terminal of a participant already participating in the communication.

### SUMMARY

The present disclosure described herein provides a communication system including a first information processing apparatus and a second information processing apparatus. The first information processing apparatus participates in communication. The second information processing apparatus participates in the communication. The first information processing apparatus includes a first communication unit, a first acceptance unit, and a first display control unit. The first communication unit receives a wide-view image captured by an image capturing apparatus, in a case where the first information processing apparatus starts participating in the communication. The first acceptance unit accepts, from an operation unit, an operation for specifying a predetermined area included in the wide-view image. The first display control unit causes a first display unit to display the predetermined area specified through the accepted operation. The first communication unit transmits first point-of-view information for specifying the predetermined area after the operation is accepted. The second information processing apparatus includes a second communication unit and a second display control unit. The second communication unit receives the wide-view image captured by the image capturing apparatus and second point-of-view information, in a case where the second information processing apparatus starts participating in the communication after the communication has already started. The second point-of-view information is based on the first point-of-view information of the first information processing apparatus participating in the communication. The second display control unit causes a second display unit to display the predetermined area specified by the received second point-of-view information in the wide-view image.

The present disclosure described herein provides an information processing apparatus including a communication unit and a display control unit. In a case where the information processing apparatus starts participating in communication with another information processing apparatus after the communication has already started, the communication unit receives a wide-view image captured by an image capturing apparatus and second point-of-view information. The second point-of-view information is based on first point-of-view information indicating a predetermined area specified in the wide-view image through an operation performed on the other information processing apparatus already participating in the communication. The display control unit causes a display unit to display the predetermined area specified by the received second point-of-view information in the wide-view image.

The present disclosure described herein provides a display control method performed by an information processing apparatus. The display control method includes, in a case where the information processing apparatus starts participating in communication with another information processing apparatus after the communication has already started, receiving a wide-view image captured by an image capturing apparatus and second point-of-view information, the second point-of-view information being based on first point-of-view information indicating a predetermined area specified in the wide-view image through an operation performed on the other information processing apparatus already participating in the communication; and causing a display unit to display the predetermined area specified by the received second point-of-view information in the wide-view image.

The present disclosure described herein provides carrier means carrying computer readable code for controlling a computer system to carry out the above-described method.

According to one aspect of the present disclosure, a wide-view image can be displayed on a communication terminal of a participant who starts participating in communication after the communication has already started, with consideration given to an area of the wide-view image that is being displayed on a communication terminal of a participant already participating in the communication.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an example of remote communication using a wide-view image;
FIG. 2 is a diagram illustrating an example schematic configuration of a communication system;
FIG. 3 is a diagram illustrating an example hardware configuration of an image capturing apparatus;
FIG. 4 is a diagram illustrating an example hardware configuration of a communication terminal and an information processing system;
FIGs. 5A, 5B, and 5C are a left side view, a front view, and a plan view of the image capturing apparatus according to an embodiment of the present disclosure, respectively;
FIG. 6 is an illustration of an example of how the image capturing apparatus is used;
FIGs. 7A, 7B, and 7C are diagrams illustrating an example of a hemispherical image (front side) captured by the image capturing apparatus, an example of a hemispherical image (back side) captured by the image capturing apparatus, and an example of an image in equirectangular projection, respectively;
FIG. 8A is an illustration of an example of how the image in equirectangular projection is mapped to a surface of a sphere;
FIG. 8B is a diagram illustrating an example of a spherical image;
FIG. 9 is a diagram illustrating an example of the positions of a virtual camera and a predetermined area in a case where the spherical image is of a three-dimensional sphere;
FIG. 10A is a perspective view of an example of the virtual camera and the predetermined area illustrated in FIG. 9;
FIG. 10B is a diagram illustrating an example of an image of the predetermined area displayed on a display;
FIG. 11 is a diagram illustrating an example of the relationship between predetermined-area information and the image of the predetermined area;
FIG. 12 is a diagram illustrating an example of a point in a three-dimensional Euclidean space defined in spherical coordinates;
FIG. 13 is a diagram illustrating an example functional configuration of a communication system according to a first embodiment of the present disclosure;
FIGs. 14A and 14B are illustrations of image management information stored in an image management information storage unit according to the first embodiment of the present disclosure;
FIG. 15 is an illustration of virtual room information stored in a virtual room information storage unit according to the first embodiment of the present disclosure;
FIG. 16 is an illustration of point-of- view information stored in a participant information storage unit according to the first embodiment of the present disclosure;
FIG. 17 is a diagram illustrating an example of a structure of point-of-view information according to the first embodiment of the present disclosure;
FIG. 18A is a diagram illustrating an example of a room entry screen;
FIG. 18B is a diagram illustrating an example of an image viewing screen displayed on the communication terminal in response to a user entering a virtual room;
FIG. 19 is a sequence diagram illustrating an example of a process in which the user (or the communication terminal) enters the virtual room;
FIG. 20 is a diagram illustrating an example of a virtual room association screen for associating an image capturing apparatus with a virtual room according to the first embodiment of the present disclosure;
FIG. 21 is a diagram illustrating an example of the virtual room association screen according to the first embodiment of the present disclosure;
FIG. 22 is a diagram illustrating an example of the virtual room association screen according to the first embodiment of the present disclosure;
FIGs. 23A and 23B are diagrams illustrating examples of a wide-view image transmission start/stop dialog displayed on the communication terminal according to the first embodiment of the present disclosure;
FIG. 24 is a sequence diagram illustrating an example of a procedure in which a user registers an image capturing apparatus in a virtual room;
FIG. 25 is a sequence diagram illustrating an example of a process for sharing a wide-view image;
FIG. 26 is a sequence diagram illustrating a processing procedure performed in the communication system according to the first embodiment of the present disclosure in a case where two users start participating in an electronic conference;
FIG. 27 is a diagram illustrating an example of ranges displayed on a plurality of communication terminals according to the first embodiment of the present disclosure;
FIG. 28 is a diagram illustrating an example of remote communication using the communication system in telemedicine;
FIG. 29 is a diagram illustrating an example of a virtual room association screen for associating an image capturing apparatus with a virtual room for telemedicine; and
FIG. 30 is a diagram illustrating an example of an image viewing screen of the related art when a user enters a virtual room halfway through.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Hereinafter, a communication system, an information processing apparatus, an information processing system, a display control method, and a program according to an example embodiment of the present disclosure will be described.

### First Embodiment

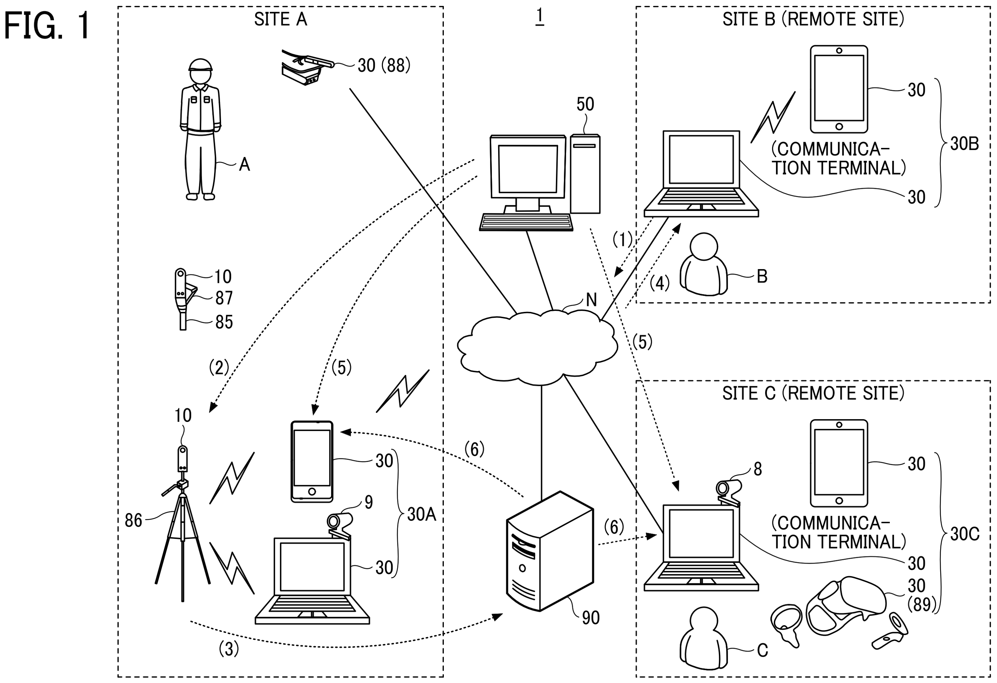

FIG. 1 is a diagram illustrating an example system configuration for implementing remote communication using a wide-view image according to an embodiment of the present disclosure. In the present embodiment, the system illustrated in FIG. 1 is referred to as a communication system 1. In FIG. 1, communication takes place across three sites, namely, a site A, a site B, and a site C, via an information processing system 50. Three sites are merely an example, and communication may be performed across two sites or four or more sites.

Remote communication refers to communication that takes place among users at physically distant locations by using information technology (IT) tools through at least one of an image and audio.

In one example, the site A is a construction site. The sites B and C are any sites across which a wide-view image can be communicated. In one example, the sites B and C are offices. An image capturing apparatus 10 is placed at the site A. In one example, the image capturing apparatus 10 captures a wide-angle image called a spherical image and an image with a wide angle of view ranging from, for example, 180 degrees to 360 degrees in the horizontal direction. Such an image with a wide angle of view is hereinafter simply referred to as a "wide-view image". Communication terminals 30A to 30C for viewing a wide-view image are placed at the sites A to C, respectively. Any communication terminal or communication terminals among the communication terminals 30A to 30C are hereinafter referred to as a "communication terminal 30" or "communication terminals 30".

In the construction site, workers are involved in various constructions at various places. A user A at the site A, a user B at the site B, and a user C at the site C monitor any construction and/or work of interest by changing a point of view as appropriate for a wide-view image that is a captured image of the entire construction site. The term "point of view" refers to the center position or range of the entire wide-view image. The center position or range of the entire wide-view image is to be displayed on displays or other means of the communication terminals 30A to 30C.

In one example, the image capturing apparatus 10 is attached to a tripod 86. In another example, the image capturing apparatus 10 is attached to an arm 85 through a gimbal 87. A relay device is installed at the construction site. In FIG. 1, the communication terminal 30A also functions as the relay device. The communication terminal 30A receives a wide-view image from the image capturing apparatus 10 via a wire or wirelessly and transmits the received wide-view image to the information processing system 50. The communication terminal 30A may also function as a terminal for viewing the wide-view image. In one example, an image capturing apparatus 9 connected to (or incorporated in) the communication terminal 30A captures an image having a normal angle of view (or a spherical image), and the captured image is transmitted to the information processing system 50. In another example, smart glasses 88 worn by the user A capture an image having a normal angle of view (or a spherical image), and the captured image is transmitted to the information processing system 50. The user A may be a worker. The smart glasses 88 are an information terminal having a display on which information acquired via the Internet is displayed with a field of view maintained. The smart glasses 88 may be placed at any site.

The communication terminal 30B, such as a personal computer (PC) or a smartphone, is placed at the site B. The communication terminal 30B is any device communicable with the information processing system 50 via a communication network N. Other examples of the communication terminal 30B include display devices such as a tablet terminal, a personal digital assistant (PDA), an electronic whiteboard, and a projector. A camera may be incorporated in or connected to the communication terminal 30B.

The communication terminal 30C, such as a PC, a smartphone, or virtual reality (VR) goggles 89, is placed at the site C. In FIG. 1, an image capturing apparatus 8 is incorporated in or connected to the communication terminal 30C. The VR goggles 89 are an information terminal for displaying a computer-based artificial world or a spherical image in accordance with the direction of movement of the neck or the body of the user wearing the VR goggles 89. The image capturing apparatus 8 may be for a wide angle of view or a normal angle of view. The communication terminal 30C is any device communicable with the information processing system 50 via the communication network N. Other examples of the communication terminal 30C include display devices such as a tablet terminal, a PDA, an electronic whiteboard, and a projector. The VR goggles 89 may be placed at any site.

In the present embodiment, the image capturing apparatus 10 and the communication terminals 30 are managed using a virtually provided area referred to as a virtual room. The image capturing apparatus 10 is associated with the virtual room. Each of the communication terminals 30 (the user who operates each of the communication terminals 30) enters (or accesses) the virtual room to receive content associated with the virtual room, for example, a wide-view image transmitted from the image capturing apparatus 10. The users of the communication terminals 30 can view the received wide-view image. The smart glasses 88 and the VR goggles 89 can also be associated with the virtual room. The image capturing apparatuses 8 and 9 enter the virtual room together with the communication terminals 30.

The term "virtual room" refers to a virtual area that can be used by a plurality of users using, for example, a computer. In a virtual room, for example, a means for a plurality of users accessing the virtual room to communicate with each other, and a means for users accessing the virtual room to use content shared in the virtual room are provided. The present embodiment illustrates an example of a virtual room, and may employ any mechanism that allows a plurality of users to share content. The virtual room is assigned in accordance with, for example, a contract with an administrator.

The users A to C at the sites A to C can each change the point of view for the wide-view image, as desired. Thus, the users A to C may view the wide-view image in real time from different points of view. It may be difficult for the users A to C to mutually understand each other. In the present embodiment, accordingly, the point of view of the communication terminal 30 at the site A is shared by the communication terminals 30 at the other sites, namely, the sites B and C. An overview of the sharing of a point of view will be described. In the following description, in one example, the point of view of the user B at the site B is shared by the users A and C at the sites A and C.
(1) The communication terminals 30A to 30C share a wide-view image (an example of a first wide-view image) captured by the image capturing apparatus 10. In response to the user B making a request to capture a wide-view image while viewing the wide-view image from any point of view on the communication terminal 30B, the communication terminal 30B (an example of a first communication terminal) transmits point-of-view information and the request to the information processing system 50.
(2) In response to the request, the information processing system 50 designates point-of-view information and transmits an image capturing request to the image capturing apparatus 10 to capture an image (either a still image or a moving image).
(3) The image capturing apparatus 10 captures a wide-view image (an example of a second wide-view image) in response to the image capturing request, and stores the wide-view image and the point-of-view information in a location specified by a uniform resource locator (URL) (an example of storage destination information) transmitted from the information processing system 50. In FIG. 1, the image capturing apparatus 10 stores the wide-view image and the point-of-view information in an external storage 90. The wide-view image stored in the external storage 90 can be downloaded and displayed by any communication terminal 30.
(4) The information processing system 50 transmits the URL to the communication terminal 30B.
(5) The information processing system 50 further transmits the URL to the communication terminals 30A and 30C (examples of a second communication terminal), which are in the same virtual room as that which the image capturing apparatus 10 and the communication terminal 30B are in, automatically or in response to a request from the user B.
(6) The communication terminals 30A and 30C connect to the URL and receive the point-of-view information and the wide-view image. Each of the communication terminals 30A and 30C sets and displays a point of view identified by the point-of-view information for the wide-view image such that the point of view matches the center of an image area. In one example, the point of view is not made to completely match the center of the image area. In another example, the point of view may be set and displayed so as to be included in a range near the center of the image area.

The same applies when the point of view of the user A at the site A is shared by the users B and C at the sites B and C and when the point of view of the user C at the site C is shared by the users A and B at the sites A and B.

As described above, the communication system 1 according to the present embodiment is a system that allows communication across a plurality of sites (i.e., among a plurality of communication terminals). In the communication system 1, even in a case where a wide-view image is distributed, point-of-view information is shared across the respective sites. This facilitates understanding among users at the respective sites.

In (3), the image capturing apparatus 10 may transmit the wide-view image itself to the information processing system 50. In (4), the information processing system 50 may transmit the wide-view image to the communication terminals 30A to 30C.

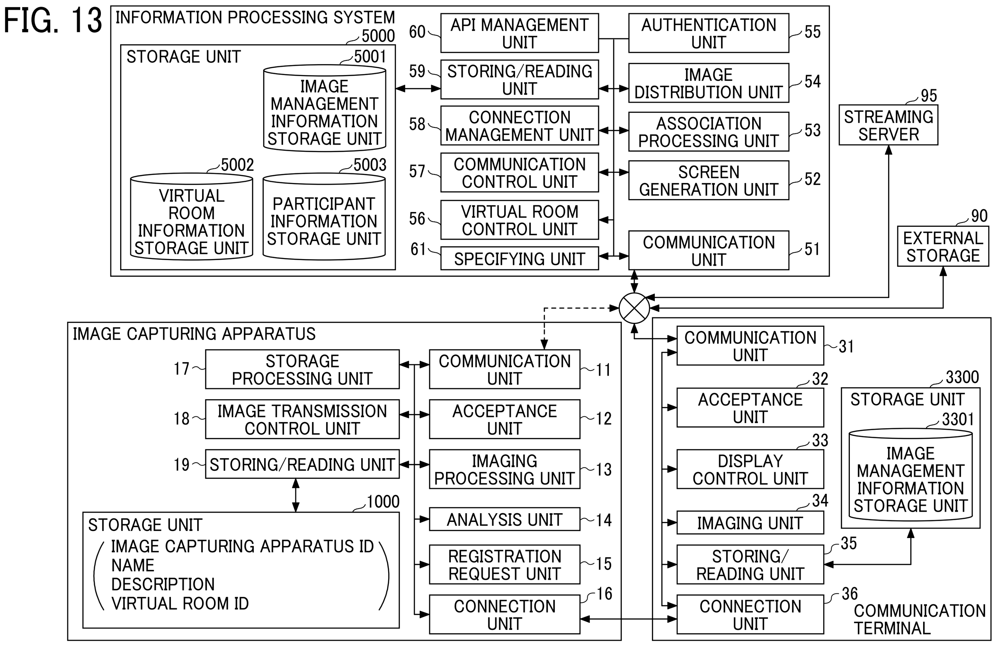

The communication system 1 according to the present embodiment may also distribute video captured by the image capturing apparatus 10 to the plurality of communication terminals 30 in real time by using a streaming server 95 (see, for example, FIG. 13).

In the example illustrated in FIG. 1, the image capturing apparatus 10 is placed at a construction site. The present embodiment is also applicable to VR education, event distribution, remote customer services, telemedicine services, and other suitable situations.

In VR education, the image capturing apparatus 10 is placed at a site such as a study room or a laboratory. Students can view a blackboard, an instrument, a sample, an experimental result, or the like from remote sites while changing the points of view as appropriate. In event distribution, the image capturing apparatus 10 is placed in a venue of an event to be held on-site. Event participants such as an audience can view the details in the venue online from remote sites while changing the points of view as appropriate. The details in the venue include images of event performers, event participants, and event presenters, images of objects involved in the event, such as products and exhibits, images of materials involved in the event, and images of the venue. The event may be held indoors or outdoors, and examples of the venue of the event include venues such as sports stadiums, concert halls, and theaters. In remote customer services, for example, in customer services for a travel agency, the image capturing apparatus 10 is placed at each of travel destination sites. A customer can plan their itinerary from a remote site while changing the point of view as appropriate.

In telemedicine services, in one example, the image capturing apparatus 10 is placed in a medical setting such as an operating room. Medical people such as doctors, medical students, and persons related to medical instruments can view the performance of a doctor(s) and a nurse(s) during on-site medical treatment, the arrangement of medical instruments, the state of a patient, vitals, and the like from remote sites while changing the points of view as appropriate.

The site at which an image is captured is not limited to any of the sites described above. An image may be captured in any space that a user (or viewer) at a viewing site desires to remotely grasp. Examples of such a space include a school, a factory, a warehouse, a building site, a server room, and a store.

### Terminology

VR education is an educational tool using VR that represents an unrealistic space in front of the eyes of a user such as a child by using a predetermined display device. In VR education, the reality of space, which is a feature of VR, increases a user's sense of immersion, thereby attracting the user's interest in subjects of education and the like to deepen understanding.

The term "remote customer service" refers to a customer service in which staff at a remote location provide product guidance to a user who is a customer by using a video conference connected via, for example, a communication terminal such as a tablet or an information processing apparatus having a display.

The term "site" refers to a location where activity takes place. In the present embodiment, a conference room is used as an example of a site. The conference room is a room used mainly for conferences. A conference is also referred to as a meeting, a session, a gathering, an assembly, a get-together, a briefing, or the like.

The term "device" refers to a piece of equipment that is not a general-purpose communication terminal 30 such as a PC or a smartphone. In one example, the device is an image capturing apparatus or an apparatus for viewing a wide-view image. In the present embodiment, examples of the device include the image capturing apparatus 10, the smart glasses 88, and the VR goggles 89.

The term "point-of-view information" refers to parameter information that specifies which predetermined area in a wide-view image to be displayed on the display is to be displayed on the display. In the present embodiment, in one example, a radius vector, a polar angle, and an azimuth angle of the center of the wide-view image to be displayed on the display are described as examples of the point-of-view information. In another example, the point-of-view information may be specified by other parameter information such as the coordinates of diagonal vertices.

The term "image" refers to a representation of a visually recognizable event that is fixed on a medium. The term "video" refers to an image displayed on a display device, and may include an image that changes over time or may include audio output over time.

The term "wide-view image" refers to an image having a wide viewing angle obtained by capturing a wide imaging range using a predetermined imaging method. Examples of the wide-view image may include a 360-degree image that is a captured image of the entire 360-degree surroundings, and the 360-degree image is also referred to as a spherical image, an omnidirectional image, or an "all-around" image.

The wide-view image includes an image of a range wider than a display range that can be displayed on the display at a time in a predetermined display method. The wide-view image has a display range corresponding to a field of view of up to 360 degrees in the vertical direction and a field of view of up to 360 degrees in the horizontal direction. In an example, the wide-view image is an image having a display range corresponding to a field of view of less than 360 degrees in the vertical and horizontal directions as long as the wide-view image has a viewing angle in a wider range than the display range that can be displayed on the display at a time. The wide-view image also includes an image having a display range wider than a range that can be visually recognized at a time by a person looking at the range. Depending on the display method, an image that can be displayed on the display at a time is also included in the wide-view image as long as the image has a wide range of viewing angles in a predetermined display method. In the present embodiment, a spherical image in equirectangular projection format is used as an example of a wide-view image. Other examples of the wide-view image include an omnidirectional image, a hemispherical image, a three-dimensional (3D) panoramic image, a two-dimensional (2D) panoramic image, and a VR image.

An image having a normal angle of view is not a wide-view image. In the present embodiment, such an image is referred to as a non-wide-view image, that is, a planar image.

The term "virtual room" refers to a virtual space provided for sharing (distributing) content such as a wide-view image among users. In a normal space, when users enter the same room, the users can share content. Thus, in the present embodiment, the term "virtual room" is used to describe an area for sharing content. The term "virtual" refers to being implemented by information processing via a network.

Users at respective sites perform remote communication across remote locations. The remote communication is a meeting, which is an online meeting, accessible from remote locations, or sites. The meeting refers to a gathering of people for consultation, discussion, or the like. Examples of the meeting include, but are not limited to, serving a customer, a conference, an assembly, a briefing, a study session, a class, a seminar, and a presentation. The remote communication is not necessarily bidirectional communication. Thus, the virtual room may be referred to as a virtual conference room.

### Example Configuration of Communication System

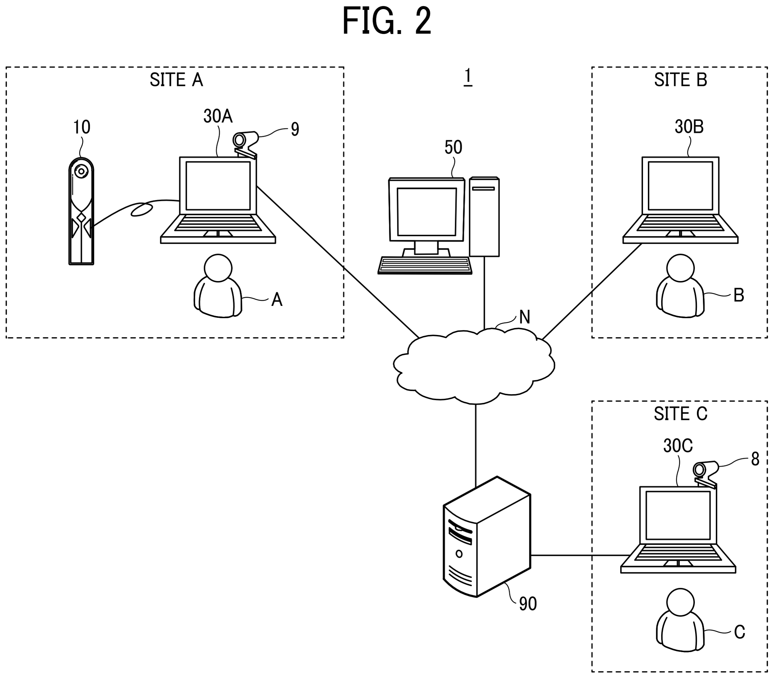

FIG. 2 is a diagram illustrating an example schematic configuration of the communication system 1. The communication system 1 is a system for transmitting and receiving a wide-view image captured by the image capturing apparatus 10 or an image having a normal angle of view bidirectionally across a plurality of sites. In the communication system 1, an image distributed from one of the sites is displayed at the other sites and is viewable to users at the other sites. In an example, a spherical image captured by the image capturing apparatus 10 is distributed as the wide-view image. In the communication system 1, for example, a wide-view image captured at a predetermined site is remotely viewable at another site.

In the communication system 1, as illustrated in FIG. 2, the image capturing apparatus 10 and the communication terminal 30A placed at the site A, the information processing system 50, and the communication terminals 30B and 30C placed at a plurality of sites, namely, the sites B and C, respectively, are communicably connected to each other.

In a case where the image capturing apparatus 10 is directly connectable to the communication network N, the communication terminal 30A, serving as a relay device (e.g., a router), does not use the relay function. In this case, the communication terminal 30A is connected to the communication network N irrespective of the image capturing apparatus 10. In a case where the communication terminal 30A is placed at the site A, the communication terminal 30A also functions as a relay device, and the user A can view a wide-view image in a manner similar to that of the communication terminals 30B and 30C. The image capturing apparatus 10 may additionally be placed at a site other than the site A, or a plurality of image capturing apparatuses 10 may be placed at the site A.

Each communication terminal 30 and the information processing system 50 can communicate with each other via the communication network N. The communication network N includes the Internet, a mobile communication network, and a local area network (LAN), for example. The communication network N may include a wired communication network and a wireless communication network. The wireless communication network may be based on a wireless communication standard such as third generation (3G), fourth generation (4G), fifth generation (5G), Wireless Fidelity (Wi-Fi^{®}), Worldwide Interoperability for Microwave Access (WiMAX), or Long Term Evolution (LTE).

The image capturing apparatus 10 is a special digital camera configured to capture an image of an object and/or surroundings such as scenery to obtain two hemispherical images, from which a spherical image is generated, as described below. The wide-view image obtained by the image capturing apparatus 10 may be a moving image or a still image, or may include both a moving image and a still image. Further, the captured image may be video including an image and audio.

The communication terminal 30 is a computer such as a PC to be operated by a user at each site. The communication terminal 30 displays an image captured at the site where the communication terminal 30 is placed, and a wide-view image (still image and/or moving image) and an image having a normal angle of view, which are distributed from other sites. For example, the communication terminal 30 acquires a wide-view image, which is captured by the image capturing apparatus 10, via the communication network N. The communication terminal 30 has installed therein software for executing image processing, such as Open Graphics Library for Embedded Systems (OpenGL ES), and can display an image based on point-of-view information that specifies a partial area in the wide-view image. OpenGL ES is an example of software for executing image processing. Any other software may be used. In an example, the communication terminal 30 does not have installed therein software for executing image processing, and executes image processing by using software received from the outside or receives a result of image processing executed by external software to display an image. That is, the communication terminal 30 can display a predetermined area, which is a portion of the wide-view image.

The communication terminal 30 according to the present embodiment may be any information processing apparatus that can transmit and receive information to and from another information processing apparatus. Examples of the information processing apparatus other than a PC may include a mobile communication terminal and a tablet terminal.

The communication terminal 30 can change the point of view for the display range of the wide-view image, as desired, in response to the user's operation. The communication terminal 30 shifts the virtual point of view in accordance with a user operation input (such as key input, dragging, or scrolling) on a touch panel, a direction button, a mouse, a keyboard, a touch pad, or the like to change and display a visual field range (predetermined area) based on point-of-view information corresponding to the shifted point of view. In an example, the communication terminal 30 is a communication terminal to be worn by the user, such as VR goggles. In response to a change in the movement of the user wearing the communication terminal 30, position information of the communication terminal 30 is changed. In response to detection of the change in the position information, the virtual point of view is shifted in accordance with the detected position information to change a visual field range (predetermined area), based on point-of-view information corresponding to the shifted point of view, and the changed visual field range (predetermined area) is displayed.

The communication terminal 30A acquires a wide-view image from the image capturing apparatus 10 via a wired cable such as a Universal Serial Bus (USB) cable and distributes the acquired wide-view image to the communication terminal 30 at another site via the information processing system 50. The connection between the image capturing apparatus 10 and the communication terminal 30A may be either a wired connection using a wired cable or a wireless connection using short-range wireless communication, for example. A plurality of communication terminals 30A may be placed at the site A.

In an example, the user A at the site A wears the smart glasses 88, and the smart glasses 88 are connected to the communication network N. In this case, an image captured by the smart glasses 88 may be transmitted to the information processing system 50 via the communication network N, and the information processing system 50 may distribute the image to the communication terminal 30 at each site.

The communication terminal 30B is placed at the site B where the user B is located, and the communication terminal 30C is placed at the site C where the user C is located. A plurality of communication terminals 30B may be placed at the site B, and a plurality of communication terminals 30C may be placed at the site C. The users B and C may carry the communication terminals 30B and 30C, respectively.

Each of the communication terminals 30A to 30C at the sites A to C can be internally or externally provided with the image capturing apparatus 8 or 9. Each of the communication terminals 30A to 30C can distribute an image of the corresponding one of the sites A to C, which is captured by the image capturing apparatus 8 or 9 thereof, to the other sites. Any device may be placed at each of the sites A to C.

The arrangement of the terminals and apparatuses (i.e., the communication terminals 30 and the image capturing apparatuses 8, 9, and 10) and the users A to C illustrated in FIG. 2 is an example. Any other arrangement may be used. Examples of the communication terminal 30 are not limited to a PC, but include a tablet terminal, a smartphone, a wearable terminal, a projector, an interactive white board (IWB), and a telepresence robot. The IWB is an electronic whiteboard with mutual communication capability. The communication terminal 30 is any computer on which a web browser or an application dedicated to an image distribution service operates.

In an example, the image capturing apparatus 10 includes a display and displays an image distributed from another site on the display.

The information processing system 50 includes one or more information processing apparatuses. The information processing system 50 manages and controls communication among the image capturing apparatus 10 and the communication terminals 30 at the respective sites and manages a wide-view image to be transmitted and received. The information processing system 50 provides a platform on which a function of providing an image distribution service for distributing a wide-view image is available. The platform may be made available to a person, a company, or any other service provider that desires to provide an image distribution service, under contract. A service provider that provides an image distribution service to a user by using a platform is hereinafter referred to as a platform contractor.

The information processing system 50 may publish an application programming interface (API) as a platform, and the platform contractor may use the API to provide various image distribution services. The platform contractor mainly develops software such as an application for calling the API or the screen to be displayed on the communication terminal 30. That is, the functions to be provided by the API, such as image distribution, are not developed from scratch.

The information processing system 50 may be implemented by a single computer or a plurality of computers such that the components (functions or means) of the information processing system 50 are divided into and assigned to the plurality of computers as appropriate. All or some of the functions of the information processing system 50 may be implemented by a server computer residing in a cloud environment or a server computer residing in an on-premise environment.

The external storage 90 is a storage device separate from the information processing system 50. The external storage 90 may be an external storage (or cloud or on-premise storage), or may be a storage included in the information processing system 50.

### Example Hardware Configuration

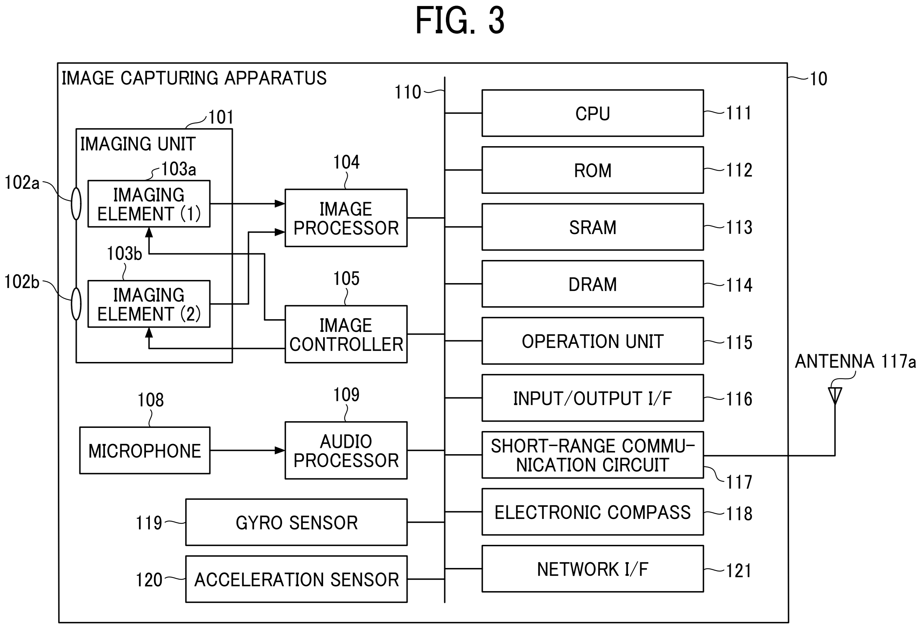

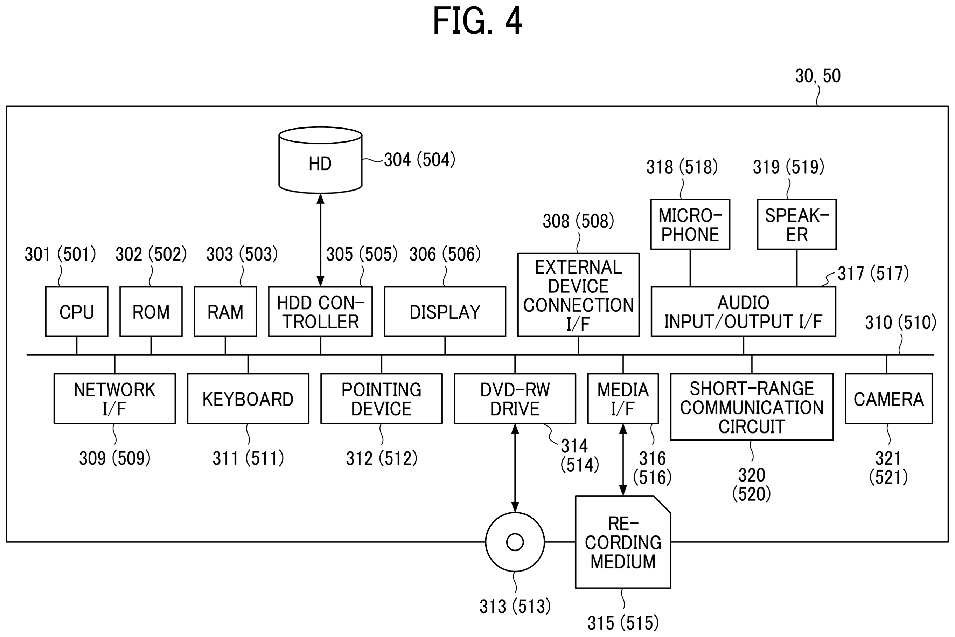

Next, the hardware configuration of each apparatus or terminal included in the communication system 1 according to the present embodiment will be described with reference to FIG. 3 or 4. In the hardware configurations illustrated in FIGs. 3 and 4, a certain hardware element may be added or deleted as appropriate.

### Hardware Configuration of Image Capturing Apparatus

First, the hardware configuration of the image capturing apparatus 10 will be described with reference to FIG. 3. FIG. 3 is a diagram illustrating an example hardware configuration of the image capturing apparatus 10. In the following description, the image capturing apparatus 10 is a spherical (omnidirectional) image capturing apparatus including two imaging elements. In some embodiments, the image capturing apparatus 10 includes any number of imaging elements, provided that the image capturing apparatus 10 includes at least two imaging elements. In one example, the image capturing apparatus 10 is not dedicated to omnidirectional image capturing, and an external omnidirectional image capturing unit may be attached to a general-purpose digital camera, a smartphone, or the like to implement functions that are substantially the same as those of the image capturing apparatus 10.

As illustrated in FIG. 3, the image capturing apparatus 10 includes an imaging unit 101, an image processor 104, an image controller 105, a microphone 108, an audio processor 109, a central processing unit (CPU) 111, a read only memory (ROM) 112, a static random access memory (SRAM) 113, a dynamic random access memory (DRAM) 114, an operation unit 115, an input/output interface (I/F) 116, a short-range communication circuit 117, an antenna 117a for the short-range communication circuit 117, an electronic compass 118, a gyro sensor 119, an acceleration sensor 120, and a network I/F 121.

The imaging unit 101 includes two wide-angle lenses (so-called fish-eye lenses) 102a and 102b (collectively referred to as a lens 102 unless distinguished), each having an angle of view of greater than or equal to 180 degrees so as to form a hemispherical image. The imaging unit 101 further includes two imaging elements 103a and 103b corresponding to the lenses 102a and 102b, respectively. Each of the imaging elements 103a and 103b includes an image sensor such as a complementary metal oxide semiconductor (CMOS) sensor or a charge-coupled device (CCD) sensor, a timing generation circuit, and a group of registers. The image sensor converts an optical image formed by the lens 102a or 102b into an electric signal and outputs image data. The timing generation circuit generates horizontal or vertical synchronization signals, pixel clocks, and the like for the image sensor. In the group of registers, various commands, parameters, and the like for an operation of the imaging element 103a or 103b are set. As a non-limiting example, the imaging unit 101 includes two wide-angle lenses. The imaging unit 101 may include one wide-angle lens or three or more wide-angle lenses.

Each of the imaging elements 103a and 103b of the imaging unit 101 is connected to the image processor 104 via a parallel I/F bus. Further, each of the imaging elements 103a and 103b of the imaging unit 101 is connected to the image controller 105 via a serial I/F bus such as an inter-integrated circuit (I2C) bus. The image processor 104, the image controller 105, and the audio processor 109 are connected to the CPU 111 via a bus 110. The ROM 112, the SRAM 113, the DRAM 114, the operation unit 115, the input/output I/F 116, the short-range communication circuit 117, the electronic compass 118, the gyro sensor 119, the acceleration sensor 120, and the network I/F 121 are also connected to the bus 110.

The image processor 104 acquires respective image data output from the imaging elements 103a and 103b via the parallel I/F buses and performs predetermined processing on the image data. Thereafter, the image processor 104 combines the image data to generate data of an equirectangular projection image described below.

The image controller 105 usually functions as a master device while each of the imaging elements 103a and 103b usually functions as a slave device. The image controller 105 sets commands and the like in the group of registers of each of the imaging elements 103a and 103b via the I2C bus. The image controller 105 receives various commands from the CPU 111. The image controller 105 further acquires status data and the like of the group of registers of each of the imaging elements 103a and 103b via the I2C bus. The image controller 105 sends the acquired status data and the like to the CPU 111.

The image controller 105 instructs the imaging elements 103a and 103b to output the image data at the time when a shutter button of the operation unit 115 is pressed. In an example, the image capturing apparatus 10 displays a preview image or a moving image (movie) on a display. Examples of the display include a display of a smartphone or any other external terminal that performs short-range communication with the image capturing apparatus 10 through the short-range communication circuit 117. In the case of displaying a movie, image data are continuously output from the imaging elements 103a and 103b at a predetermined frame rate (expressed in frames per minute).

As described below, the image controller 105 operates in cooperation with the CPU 111 to synchronize the time when the imaging element 103a outputs image data and the time when the imaging element 103b outputs image data. In the present embodiment, the image capturing apparatus 10 does not include a display unit (or display). In another embodiment, the image capturing apparatus 10 may include a display unit. The microphone 108 converts sound to audio (signal) data. The audio processor 109 acquires the audio data output from the microphone 108 via an I/F bus and performs predetermined processing on the audio data.

The CPU 111 controls the overall operation of the image capturing apparatus 10 and performs predetermined processing. The ROM 112 stores various programs to be executed by the CPU 111. Each of the SRAM 113 and the DRAM 114 operates as a work memory to store programs to be executed by the CPU 111 or data being currently processed. More specifically, in one example, the DRAM 114 stores image data currently processed by the image processor 104 and data of the equirectangular projection image on which processing has been performed.

The operation unit 115 collectively refers to various operation buttons such as a shutter button, a power switch, a touch panel having both the display and operation functions, and the like. The user operates the operation unit 115 to input various image capturing modes or image capturing conditions.

The input/output I/F 116 collectively refers to an interface circuit such as a USB I/F that allows the image capturing apparatus 10 to communicate with an external medium such as a Secure Digital (SD) card or an external personal computer. The input/output I/F 116 may be either wired or wireless. The data of the equirectangular projection image, which is stored in the DRAM 114, is stored in the external medium via the input/output I/F 116 or transmitted to an external terminal (apparatus) via the input/output I/F 116, as desired.

The short-range communication circuit 117 communicates with the external terminal (apparatus) via the antenna 117a of the image capturing apparatus 10 by short-range wireless communication technology such as near field communication (NFC), Bluetooth^{®}, or Wi-Fi^{®}. The short-range communication circuit 117 can transmit the data of the equirectangular projection image to the external terminal (apparatus).

The electronic compass 118 calculates an orientation of the image capturing apparatus 10 from the Earth's magnetism and outputs orientation information. The orientation information is an example of related information (metadata) in compliance with exchangeable image file format (Exif). The orientation information is used for image processing such as image correction of a captured image. The related information also includes data of a date and time when the image was captured, and data of a data size of image data. The gyro sensor 119 detects changes in orientation of the image capturing apparatus 10, including roll, pitch, and yaw angles, as the image capturing apparatus 10 moves. The change in orientation is one example of related information (metadata) in compliance with Exif. This information is used for image processing such as image correction of a captured image. The acceleration sensor 120 detects acceleration in three axial directions. The image capturing apparatus 10 calculates the position of the image capturing apparatus 10 (e.g., the tilt of the image capturing apparatus 10 relative to the direction of gravity), based on the acceleration detected by the acceleration sensor 120. The gyro sensor 119 and the acceleration sensor 120 of the image capturing apparatus 10 improve the accuracy of image correction.

The network I/F 121 is an interface for performing data communication using the communication network N, such as the Internet, via a router or the like.

### Hardware Configuration of Communication Terminal

FIG. 4 is a diagram illustrating an example hardware configuration of the communication terminal 30 and the information processing system 50. First, the communication terminal 30 will be described. Each hardware element of the communication terminal 30 is denoted by a reference numeral in 300 series. The communication terminal 30 is implemented by one or more computers. As illustrated in FIG. 4, the communication terminal 30 includes a CPU 301, a ROM 302, a RAM 303, a hard disk (HD) 304, a hard disk drive (HDD) controller 305, a display 306, an external device connection I/F 308, a network I/F 309, a bus line 310, a keyboard 311, a pointing device 312, a digital versatile disc rewritable (DVD-RW) drive 314, a media I/F 316, an audio input/output I/F 317, a microphone 318, a speaker 319, a short-range communication circuit 320, and a camera 321.

The CPU 301 controls the overall operation of the communication terminal 30. The ROM 302 stores a program used for booting the CPU 301, such as an initial program loader (IPL). The RAM 303 is used as a work area for the CPU 301. The HD 304 stores various types of data such as a program. The HDD controller 305 controls reading or writing of various types of data from or to the HD 304 under the control of the CPU 301. The display 306 displays various types of information such as a cursor, a menu, a window, characters, and an image. The display 306 is an example of a display unit. In one example, the display 306 is a touch panel display provided with input means. The external device connection I/F 308 is an interface for connecting to various external devices. The external devices include, but are not limited to, a USB memory and a printer. The network I/F 309 is an interface for performing data communication using the communication network N. The bus line 310 is, for example, an address bus or a data bus for electrically connecting the hardware elements illustrated in FIG. 4, such as the CPU 301, to each other.

The keyboard 311 is an example of input means including a plurality of keys for inputting characters, numerical values, various instructions, and the like. The pointing device 312 is an example of input means used for selecting or executing various instructions, selecting a target for processing, or moving a cursor being displayed. The input means are not limited to the keyboard 311 and the pointing device 312 and may include a touch panel and an audio input device. The DVD-RW drive 314 controls reading or writing of various types of data from or to a DVD-RW 313, which is an example of a removable recording medium. The DVD-RW 313 is an example, and a digital versatile disk recordable (DVD-R), a Blu-ray Disc^{®}, or any other recording medium may be used instead. The media I/F 316 controls reading or writing (storing) of data from or to a recording medium 315 such as flash memory. The microphone 318 is an example of built-in audio capturing means for receiving audio input. The audio input/output I/F 317 is a circuit for controlling input and output of audio signals between the microphone 318 and the speaker 319 under the control of the CPU 301. The short-range communication circuit 320 communicates with an external terminal (apparatus) using short-range wireless communication technology such as NFC, Bluetooth^{®}, or Wi-Fi^{®}. The camera 321 is an example of built-in image capturing means for capturing an image of an object to obtain image data. In one example, the microphone 318, the speaker 319, and the camera 321 are devices external to the communication terminal 30 as an alternative to built-in devices.

### Hardware Configuration of Information Processing System

As illustrated in FIG. 4, each hardware element of the information processing system 50 is denoted by a reference numeral in 500 series in parentheses. The information processing system 50 is implemented by one or more computers and has substantially the same configuration as that of the communication terminal 30, as illustrated in FIG. 4, and thus the description of the hardware elements of the information processing system 50 will be omitted.

Each of the programs described above may be recorded as a file in a format installable or executable on a computer-readable recording medium for distribution. Examples of the recording medium include a compact disc recordable (CD-R), a digital versatile disc (DVD), a Blu-ray Disc^{®}, an SD card, and a USB memory. The recording medium may be provided in the form of a program product to domestic or foreign users. For example, the communication terminal 30 executes a program according to an embodiment of the present disclosure to implement an image display method according to an embodiment of the present disclosure.

### Wide-View Image and Point-of-View Information

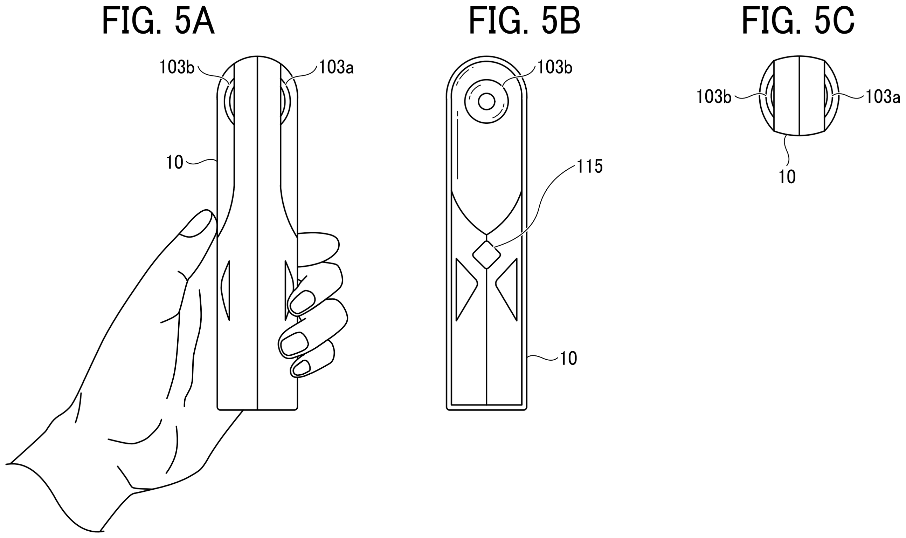

A method for generating a wide-view image (spherical image) will be described hereinafter with reference to FIGs. 5A to 12.

First, the external appearance of the image capturing apparatus 10 will be described with reference to FIGs. 5A to 5C. The image capturing apparatus 10 is a digital camera for capturing images from which a 360-degree spherical image is generated. FIG. 5A is a left side view of the image capturing apparatus 10. FIG. 5B is a front view of the image capturing apparatus 10. FIG. 5C is a plan view of the image capturing apparatus 10. The illustrated external view of the image capturing apparatus 10 is merely an example. The image capturing apparatus 10 may have any other external appearance.

As illustrated in FIG. 5A, the image capturing apparatus 10 has a size such that a person can hold the image capturing apparatus 10 with one hand. The illustrated shape of the image capturing apparatus 10 is an example. The image capturing apparatus 10 may have any other shape. As illustrated in FIGs. 5A, 5B, and 5C, the imaging element 103a and the imaging element 103b are disposed in an upper portion of the image capturing apparatus 10 such that the imaging element 103a is disposed on the front side and the imaging element 103b is disposed on the back side. The imaging elements (image sensors) 103a and 103b are used in combination with optical members (e.g., the lenses 102a and 102b described above), each being configured to capture a hemispherical image having an angle of view of greater than or equal to 180 degrees. As illustrated in FIG. 5B, the operation unit 115, such as a shutter button, is disposed on the back surface of the image capturing apparatus 10. As described above, the image capturing apparatus 10 may include one imaging element or three or more imaging elements.

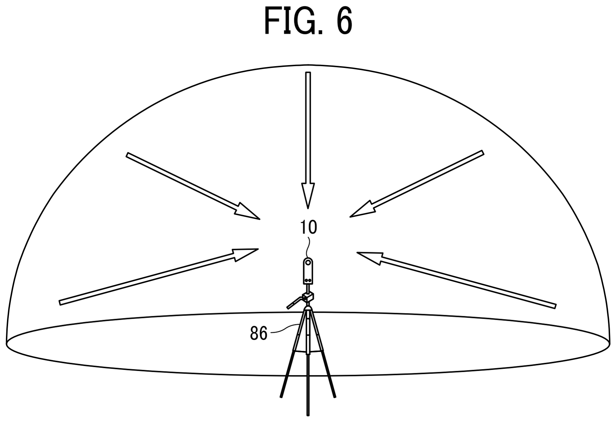

Next, an example of use of the image capturing apparatus 10 will be described with reference to FIG. 6. FIG. 6 is an illustration of an example of how the image capturing apparatus 10 is used. As illustrated in FIG. 6, for example, the image capturing apparatus 10 is used for capturing an image of an object surrounding the image capturing apparatus 10. Each of the imaging elements 103a and 103b illustrated in FIGs. 5A to 5C captures an image of an object surrounding the image capturing apparatus 10. As a result, two hemispherical images are obtained.

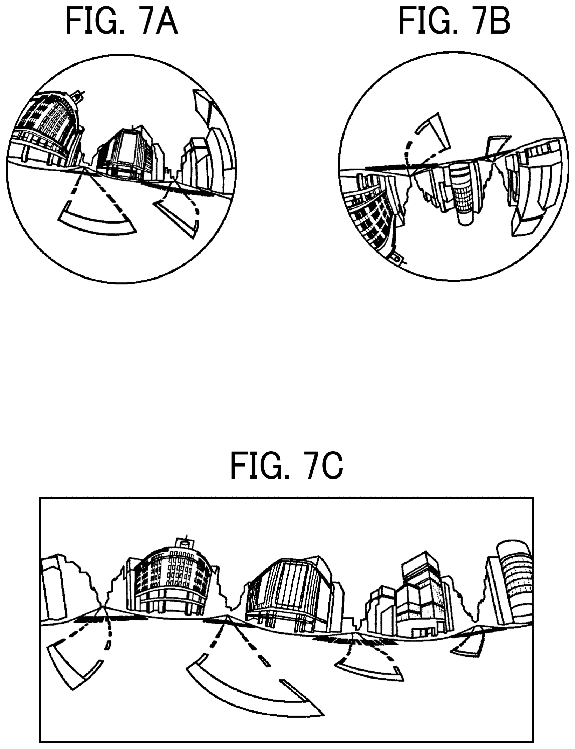

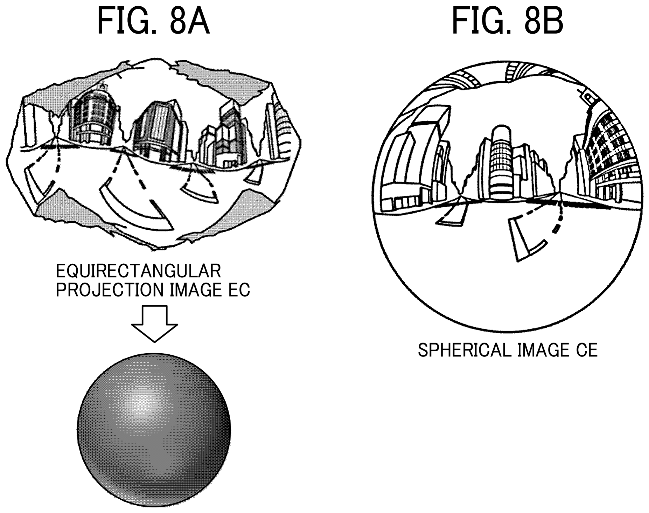

Next, an overview of a process for generating a spherical image from images captured by the image capturing apparatus 10 will be described with reference to FIGs. 7A to 7C and FIGs. 8A and 8B. FIG. 7A illustrates a hemispherical image (front side) captured by the image capturing apparatus 10. FIG. 7B illustrates a hemispherical image (back side) captured by the image capturing apparatus 10. FIG. 7C illustrates an image in equirectangular projection (hereinafter referred to as an "equirectangular projection image" or an "equidistant cylindrical projection image"). FIG. 8A conceptually illustrates how the equirectangular projection image is mapped to a surface of a sphere. FIG. 8B illustrates a spherical image.

As illustrated in FIG. 7A, an image obtained by the imaging element 103a is a curved hemispherical image (front side) captured through the lens 102a described above. As illustrated in FIG. 7B, an image captured by the imaging element 103b is a curved hemispherical image (back side) captured through the lens 102b described above. The image capturing apparatus 10 combines the hemispherical image (front side) and the hemispherical image (back side), which are flipped by 180 degrees, to create an equirectangular projection image EC as illustrated in FIG. 7C.

The image capturing apparatus 10 uses software such as OpenGL ES to map the equirectangular projection image EC to a sphere so as to cover the surface of the sphere, as illustrated in FIG. 8A. As a result, the image capturing apparatus 10 generates a spherical image (or spherical panoramic image) CE as illustrated in FIG. 8B. That is, the spherical image CE is represented as the equirectangular projection image EC, which corresponds to a surface facing the center of the sphere. OpenGL ES is a graphics library used for visualizing 2D data and 3D data. OpenGL ES is an example of software for executing image processing. Any other software may be used to create the spherical image CE. The spherical image CE may be either a still image or a moving image.

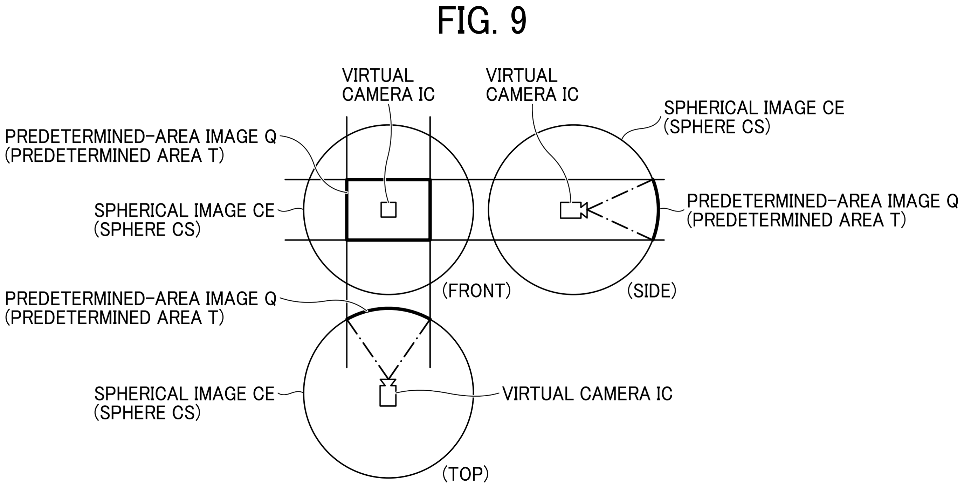

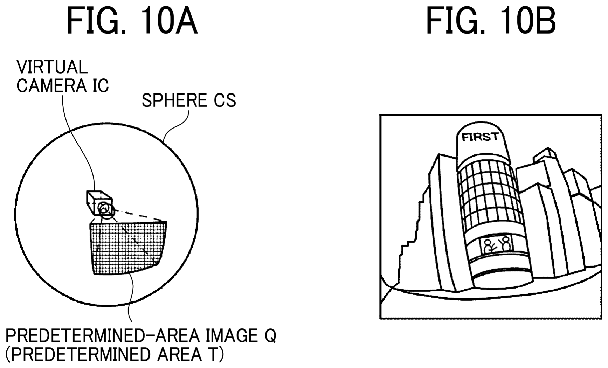

As described above, since the spherical image CE is an image mapped to a sphere in such a manner as to cover the surface of the sphere, part of the image may look distorted when viewed by a user, providing a strange feeling. Accordingly, the image capturing apparatus 10 displays an image of a predetermined area T, which is part of the spherical image CE, as a planar image having fewer curves to make the user feel comfortable. The predetermined area is, for example, a part of the spherical image CE that is viewable by the user. In this disclosure, the image of the predetermined area, which is viewable, may be referred to as a "predetermined-area image" or "viewable-area image" Q. That is, the terms "predetermined-area image" and "viewable-area image" may be used interchangeably. The display of the predetermined-area image will be described with reference to FIGs. 9, 10A, and 10B.

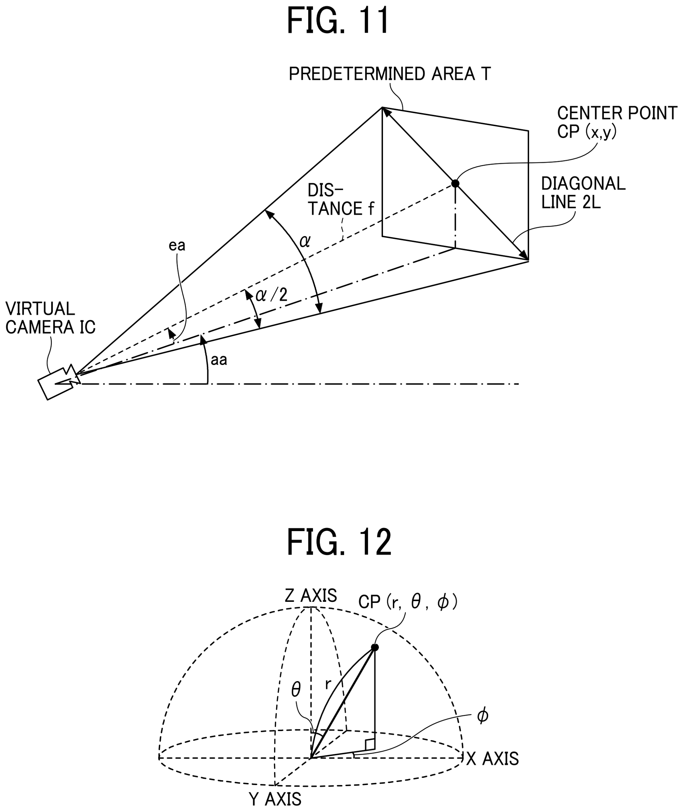

FIG. 9 is a diagram illustrating the position of a virtual camera IC and the position of the predetermined area T in a case where the spherical image CE is of a three-dimensional sphere CS. The virtual camera IC corresponds to a position of a point of view (viewpoint) of a user who is viewing the spherical image CE represented as a surface area of the three-dimensional solid sphere CS. FIG. 10A is a perspective view of the virtual camera IC and the predetermined area T illustrated in FIG. 9, and FIG. 10B is a diagram illustrating a predetermined-area image displayed on a display. In FIG. 10A, the spherical image CE illustrated in FIG. 9 is represented by the three-dimensional sphere CS. Assuming that the spherical image CE generated in the way described above is a surface area of the sphere CS, the virtual camera IC is inside the spherical image CE as illustrated in FIG. 9. The predetermined area T in the spherical image CE is an imaging area of the virtual camera IC. Specifically, the predetermined area T is specified by predetermined-area information indicating an imaging direction and an angle of view of the virtual camera IC in a three-dimensional virtual space containing the spherical image CE. Zooming in or out of the predetermined area T may be implemented by bringing the virtual camera IC closer to or farther away from the spherical image CE. The predetermined-area image Q is an image of the predetermined area T in the spherical image CE. The predetermined area T is defined by an angle of view α of the virtual camera IC and a distance f from the virtual camera IC to the spherical image CE (see FIG. 11).

The predetermined-area image Q illustrated in FIG. 10A is displayed on a predetermined display as an image of the imaging area of the virtual camera IC, as illustrated in FIG. 10B. The image illustrated in FIG. 10B is a predetermined-area image represented by predetermined-area information that is set by default. A description will be made using the imaging direction (ea, aa) and the angle of view (α) of the virtual camera IC. In another example, the predetermined area T is not defined by the angle of view α and the distance f, and the imaging area of the virtual camera IC, which is the predetermined area T, is identified by position coordinates (X, Y, Z).

Next, the relationship between the predetermined-area information and the image of the predetermined area T will be described with reference to FIG. 11. FIG. 11 is a diagram illustrating the relationship between the predetermined-area information and the image of the predetermined area T. As illustrated in FIG. 11, "ea" denotes an elevation angle, "aa" denotes an azimuth angle, and "α" denotes an angle of view of the virtual camera IC. The position of the virtual camera IC is adjusted such that the point of gaze of the virtual camera IC, indicated by the imaging direction (ea, aa), matches a center point CP (x, y) of the predetermined area T serving as the imaging area of the virtual camera IC. As illustrated in FIG. 11, the center point CP (x, y) of the predetermined area T, whose diagonal angle of view is represented by the angle of view α of the virtual camera IC and is denoted by α, is used as a parameter (x, y) of the predetermined-area information. The predetermined-area image Q is an image of the predetermined area T in the spherical image CE. The distance f is the distance from the virtual camera IC to the center point CP (x, y) of the predetermined area T. The distance between the center point CP (x, y) and a given vertex of the predetermined area T is denoted by "L" (2L is a diagonal line). In FIG. 11, a trigonometric function generally expressed by Equation (1) below holds. $L / f = tan \left(\frac{α}{2}\right)$

The image capturing apparatus 10 described above is an example of an image capturing apparatus for acquiring a wide-view image. The spherical image CE is an example of a wide-view image. The wide-view image is generally an image captured with a wide-angle lens such as a lens that can capture an image of a range wider than a range that the human eye can perceive.

FIG. 12 is a diagram illustrating the relationship illustrated in FIG. 11 using a point in a three-dimensional Euclidean space defined in spherical coordinates. The center point CP illustrated in FIG. 11 is represented by a spherical polar coordinate system to obtain position coordinates (r, θ, φ). The position coordinates (r, θ, φ) represent a radius vector, a polar angle, and an azimuth angle, respectively. The radius vector r is the distance from the origin of the three-dimensional virtual space including the spherical image CE to the center point CP. Accordingly, the radius vector r is equal to the distance f illustrated in FIG. 11. FIG. 12 illustrates the relationship illustrated in FIG. 11. In the following description, the position coordinates (r, θ, φ) of the virtual camera IC are used as an example of point-of- view information. As described above, the point-of-view information is any parameter information that can define the predetermined area T (the predetermined-area image Q) displayed on the predetermined display illustrated in FIG. 10A as the image of the imaging area of the virtual camera IC. The point-of-view information includes the coordinates of the diagonal vertices of the predetermined area T. In an example, the point-of-view information includes information indicating the angle of view α of the virtual camera IC and information indicating the center point CP (x, y), which have been described with reference to FIG. 11. Examples of the point-of-view information include position coordinate information in the form of spherical coordinates, position coordinate information in the form of orthogonal coordinates, and a difference value between the predetermined-area information that is set by default and the coordinates. Other examples of the point-of-view information include information other than coordinate information, such as an angle and a distance, as illustrated in FIG. 11. In FIGs. 11 and 12, the center point CP of the predetermined area T is used as a reference. In another example, the predetermined area T may be defined by parameter information with any one of the vertices of the predetermined area T as a reference. In the foregoing description of the point-of-view information, as a non-limiting example, the wide-view image is a spherical image. In another wide-view image, information that defines the predetermined area T in the other wide-view image is point-of-view information.

### Functions

Next, the functional configuration of the communication system 1 according to the present embodiment will be described with reference to FIG. 13. FIG. 13 is a diagram illustrating an example functional configuration of the communication system 1 according to the present embodiment. FIG. 13 illustrates functions, related to processes or operations described below, of the terminals, the apparatuses, and the server illustrated in FIG. 1.

### Functional Configuration of Image Capturing Apparatus

First, the functional configuration of the image capturing apparatus 10 will be described with reference to FIG. 13. The image capturing apparatus 10 includes a communication unit 11, an acceptance unit 12, an imaging processing unit 13, an analysis unit 14, a registration request unit 15, a connection unit 16, a storage processing unit 17, an image transmission control unit 18, and a storing/reading unit 19. Each unit is a function or means implemented by or caused to function by one or more of the hardware elements illustrated in FIG. 3 operating in accordance with instructions from the CPU 111 according to a program loaded onto the SRAM 113 or the DRAM 114. The image capturing apparatus 10 further includes a storage unit 1000, which is implemented by, for example, the ROM 112 illustrated in FIG. 3.

The communication unit 11 has a function of connecting to the communication network N by using wireless communication technology such as Wi-Fi^{®} to transmit and receive various types of data or information to and from another apparatus. In the present embodiment, the connection unit 16 transmits a wide-view image acquired by the imaging processing unit 13 to the information processing system 50. In another embodiment, the communication unit 11 may transmit the wide-view image to the information processing system 50.

The acceptance unit 12 has a function of receiving an operation input for the image capturing apparatus 10 from the user. The acceptance unit 12 accepts an operation for turning on or off the power, turning on or off the shutter button (start or stop of transmission of a wide-view image), or any other operation.

The imaging processing unit 13 captures an image of an object or surroundings such as scenery and acquires a captured image. The captured image acquired by the imaging processing unit 13 may be either a moving image or a still image, or both. In another example, the captured image may include an image and audio. Further, for example, the imaging processing unit 13 captures an image of a two-dimensional code displayed on the display 306 of the communication terminal 30.

The analysis unit 14 analyzes the two-dimensional code, of which the image is captured by the imaging processing unit 13, to extract information included in the two-dimensional code. The extracted information includes a URL for registering the image capturing apparatus 10 in the virtual room, a temporary ID, and a password.

The registration request unit 15 transmits a request to the information processing system 50 to register the image capturing apparatus 10 in the virtual room in the information processing system 50, by using the information included in the two-dimensional code read by the analysis unit 14.

The connection unit 16 has a function of receiving a supply of power from the communication terminal 30A and performing data communication. The connection unit 16 is implemented by, for example, the short-range communication circuit 117.

The storage processing unit 17 performs processing to store a wide-view image captured in response to an image capturing request from any site in a location specified by a URL (e.g., the external storage 90) transmitted from the information processing system 50.

The image transmission control unit 18 has a function of controlling transmission of a wide-view image to the information processing system 50. For example, the image transmission control unit 18 transmits a captured image acquired by the imaging processing unit 13 to the information processing system 50 periodically or in response to a user operation when the captured image is a still image, or at a predetermined frame rate (expressed in frames per second, or FPS) when the captured image is a moving image. The image transmission control unit 18 also performs switching between the communication unit 11 and the connection unit 16.

The storing/reading unit 19 has a function of storing various types of data in the storage unit 1000 or reading various types of data from the storage unit 1000. The storage unit 1000 stores captured image data acquired by the imaging processing unit 13, an image capturing apparatus ID, and the like. The captured image data stored in the storage unit 1000 may be deleted when a predetermined amount of time has elapsed after the captured image data was acquired by the imaging processing unit 13, or the data transmitted to the information processing system 50 may be deleted from the storage unit 1000.

The image capturing apparatus 10 has installed therein an application (also referred to as a plug-in) for supporting the communication system 1. The application is not used when the image capturing apparatus 10 is a commercially available image capturing apparatus, but otherwise is used to associate the image capturing apparatus 10 with a virtual room or to receive external control. Some of the functions illustrated in FIG. 13, such as the registration request unit 15, are implemented by the application.

### Functional Configuration of Communication Terminal

Next, the functional configuration of the communication terminal 30 will be described with reference to FIG. 13. The communication terminal 30 includes a communication unit 31, an acceptance unit 32, a display control unit 33, an imaging unit 34, a storing/reading unit 35, and a connection unit 36. Each unit is a function or means implemented by or caused to function by one or more of the hardware elements illustrated in FIG. 4 operating in accordance with instructions from the CPU 301 according to a program (either the web browser or a dedicated application) loaded onto the RAM 303. The communication terminal 30 further includes a storage unit 3300, which is implemented by the ROM 302 or the recording medium 315 illustrated in FIG. 4.

The communication unit 31 has a function of connecting to the communication network N and transmitting and receiving various types of data or information to and from another apparatus. The communication unit 31 is implemented by, for example, the network I/F 309.

The acceptance unit 32 has a function of receiving various selections or operation inputs for the communication terminal 30.

The display control unit 33 has a function of causing the display 306 of the communication terminal 30 to display a wide-view image, an image having a normal angle of view, and various screens. For example, the display control unit 33 causes the display 306 to display a two-dimensional code transmitted from the information processing system 50. In one example, the two-dimensional code is QR code^{®}, a DataMatrix (DataCode) code, a MaxiCode code, or a PDF417 code. In another example, the two-dimensional code is a barcode.

The connection unit 36 has a function of supplying power to the image capturing apparatus 10 and performing data communication. The connection unit 36 is implemented by, for example, the short-range communication circuit 320.

The storing/reading unit 35 has a function of storing various types of data in the storage unit 3300 or reading various types of data from the storage unit 3300 in accordance with instructions from the CPU 301 illustrated in FIG. 4. The storage unit 3300 includes an image management information storage unit 3301.

### Functional Configuration of Information Processing System

Next, the functional configuration of the information processing system 50 will be described. The information processing system 50 includes a communication unit 51, a screen generation unit 52, an association processing unit 53, an image distribution unit 54, an authentication unit 55, a virtual room control unit 56, a communication control unit 57, a connection management unit 58, a storing/reading unit 59, an API management unit 60, and a specifying unit 61. Each unit is a function or means implemented by or caused to function by one or more of the hardware elements illustrated in FIG. 4 operating in accordance with instructions from the CPU 501 according to a program loaded onto the RAM 503. The information processing system 50 further includes a storage unit 5000. The storage unit 5000 is implemented by the ROM 502, the HD 504, or the recording medium 515 illustrated in FIG. 4.

The communication unit 51 (an example of a third communication unit) has a function of transmitting and receiving various types of data or information to and from another apparatus via the communication network N.

The screen generation unit 52 generates screen information to be displayed on the communication terminal 30. In a case where the communication terminal 30 executes a web application, the screen information is created by Hypertext Markup Language (HTML), Extensible Markup Language (XML), Cascading Style Sheets (CSS), JavaScript^{®}, or any other language. In a case where the communication terminal 30 executes a native application, the screen information is held by the communication terminal 30, and the information to be displayed is transmitted in XML or the like. The screen generation unit 52 generates screen information in which a wide-view image or the like to be distributed by the image distribution unit 54 is arranged.

The association processing unit 53 performs control related to sharing of the point-of-view information of the wide-view image. In response to receipt of an image capturing request together with point-of-view information from the communication terminal 30, the association processing unit 53 performs processing to associate the point-of-view information with a wide-view image acquired from the image capturing apparatus 10 in response to an image capturing request. The association processing unit 53 stores the wide-view image and the point-of-view information, which are associated with each other, in an image management information storage unit 5001. Further, the association processing unit 53 transmits a URL, which is information indicating a storage location where the associated wide-view image and point-of-view information are to be stored, to the communication terminal 30. In one example, the information processing system 50 does not simultaneously receive the point-of-view information and the image capturing request from the communication terminal 30. The information processing system 50 may separately receive the point-of-view information and the image capturing request and perform association processing. The URL is an example of information indicating the storage location. The information indicating the storage location may be in any other format such as a uniform resource identifier (URI).

The image distribution unit 54 distributes, to the communication terminal 30 operated by a user who is in the virtual room, a wide-view image transmitted from the image capturing apparatus 10 associated with the same virtual room. An image having a normal angle of view captured by a camera included in the communication terminal 30 or the image capturing apparatus 8 or 9 connected to the communication terminal 30 is also distributed in a similar manner. The present embodiment enables distribution using the streaming server 95, which is provided externally, in addition to distribution by the image distribution unit 54.

The authentication unit 55 has a function of, based on an authentication request received by the communication unit 51, authenticating the request source. For example, the authentication unit 55 determines whether authentication information (a user ID and a password) included in the authentication request received by the communication unit 51 matches authentication information held in advance to perform user authentication. The authentication information may be a card number of an integrated circuit (IC) card or biometric authentication information such as a face, a fingerprint, or a voiceprint. The authentication unit 55 may perform authentication using an external authentication system or an authentication method such as Open Authorization (OAuth).

The virtual room control unit 56 controls, for example, entry of the communication terminal 30 or a user into a virtual room, and association of a device with a virtual room. In response to successful authentication by the authentication unit 55, the virtual room control unit 56 registers the user ID and the Internet protocol (IP) address of the communication terminal 30 in a virtual room information storage unit 5002 or associates the image capturing apparatus 10 with the virtual room.

The virtual room control unit 56 performs control such that, in response to a plurality of communication terminals 30 entering (or accessing) a virtual room, content associated with the virtual room can be viewed on the plurality of communication terminals 30.

The communication control unit 57 manages the start, establishment, and end of communication with the image capturing apparatus 10 associated with each virtual room. The communication control unit 57 also manages the start, establishment, and end of communication for distributing a wide-view image or audio in response to the communication terminal 30 entering or leaving the virtual room.

The connection management unit 58 manages communication (connection) established with the information processing system 50 by the communication terminal 30 and the image capturing apparatus 10 in association with the virtual room.

The API management unit 60 manages an API to be used by a platform contractor to provide an image distribution service of a wide-view image. In the use of the API, the platform contractor develops software for calling the API. The software to be developed may operate on a server or may operate on a client such as a communication terminal. Any functions of the information processing system 50, such as the image distribution unit 54, the association processing unit 53, and the communication control unit 57, can be provided as an API. A function added to the information processing system 50 later may be provided as an API. To determine whether to provide a function as an API, a communication terminal operated by the platform provider accesses the information processing system 50 and receives the public settings of the API. As a result, the API management unit 60 can control the API based on the public settings. The API management unit 60 may perform an authentication process for checking whether software operating on a requesting entity that makes a request to call the API is software developed by an authorized platform contractor. In a specific example of the authentication process, the information processing system 50 receives, from the software operating on the requesting entity, an application ID issued to the software developed by the platform contractor in advance by the API management unit 60. If the API management unit 60 determines that the application ID matches an application ID stored in a platform contractor information storage unit, the API management unit 60 performs control to permit provision of the API since the software is valid. If the software is not determined to be valid, the API management unit 60 performs control not to permit provision of the API. The application ID is an example of authentication information for determining validity. The API management unit 60 may use authentication information issued in advance by the API management unit 60 of the information processing system 50 or by an external system to check the validity of the requesting entity. Examples of such authentication information as issued in advance include an access token, a ticket, a security key, a password, and a personal identification number (PIN) code. In the present embodiment, while the use of a function of the information processing system 50 as an API is not described, the same process flow is performed, except that software such as an application developed by a platform contractor uses a function of the information processing system 50 through a determination made by the API management unit 60.

The storing/reading unit 59 has a function of storing various types of data in the storage unit 5000 or reading various types of data from the storage unit 5000. The storage unit 5000 includes the image management information storage unit 5001, the virtual room information storage unit 5002, and a participant information storage unit 5003.

When a user starts participating in an electronic conference, the storing/reading unit 59 stores information on the user who starts participating in the electronic conference in the participant information storage unit 5003.

When the communication control unit 57 receives a notification from the communication terminal 30 of a user participating in the electronic conference that a range displayed as the wide-view image has been changed, the storing/reading unit 59 stores point-of-view information indicating the changed range in the participant information storage unit 5003.

When the wide-view image is to be transmitted to the communication terminal 30 of a user who starts participating in the electronic conference after the electronic conference has already started (hereinafter referred to as a "later-participating user", if any), the specifying unit 61 refers to the participant information storage unit 5003 and specifies point-of-view information indicating a range of the wide-view image to be displayed on the communication terminal 30 of the later-participating user. The point-of-view information will be described below.

The communication control unit 57 transmits the point-of-view information indicating the range of the wide-view image specified by the specifying unit 61 to the communication terminal 30 of the later-participating user.

### Image Management Information Storage Unit 5001

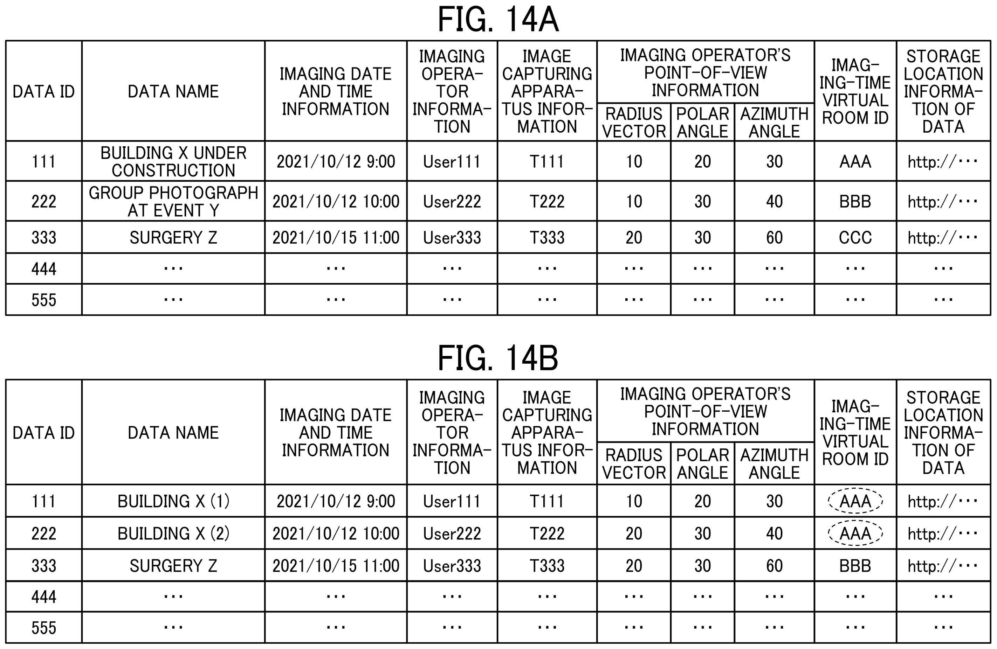

FIG. 14A is an illustration of image management information stored in the image management information storage unit 5001. The image management information storage unit 5001 stores image management information as illustrated in FIG. 14A or 14B. The image management information is information for managing wide-view images captured in response to image capturing requests. In response to a user transmitting an image capturing request from the communication terminal 30, image management information for one record is generated. The items included in the image management information will be described.

The item "data ID" represents identification information that identifies a wide-view image. The information processing system 50 assigns a number to each data ID. ID is an abbreviation for identification and means an identifier or identification information. The ID is any one or a combination of two or more of a name, a symbol, a character string, and a numerical value that are used for uniquely identifying a specific object from among a plurality of objects.

The item "data name" represents the name of a wide-view image set by the user of the communication terminal 30. Each data name may be set by a user or automatically.

The item "imaging date and time information" represents information that specifies the imaging date and time of a wide-view image. Examples of the imaging date and time include the date and time when the user input an image capturing request to the communication terminal 30, and the date and time when the image capturing apparatus 10 captured a wide-view image. The imaging date and time information may be a timestamp of a wide-view image.

The item "imaging operator information" represents identification information (or a user name) of a user (imaging operator) who has input an image capturing request to the communication terminal 30. Since a user inputs an image capturing request to the communication terminal 30 after entering a virtual room, a user registered in the imaging operator information is identified by authentication for the information processing system 50 or the virtual room. The imaging operator information is transmitted to the information processing system 50 together with an image capturing request.

The item "image capturing apparatus information" represents identification information (image capturing apparatus ID) of the image capturing apparatus 10 that has captured a wide-view image. The information processing system 50 assigns a number to each image capturing apparatus ID and shares the image capturing apparatus ID with the image capturing apparatus 10. The image capturing apparatus ID may be information unique to the image capturing apparatus 10, such as a Media Access Control (MAC) address or a serial number. The image capturing apparatus ID is transmitted to the information processing system 50 together with the associated wide-view image.

The item "imaging operator's point-of-view information" represents point-of-view information including a radius vector, a polar angle, and an azimuth angle. The point-of-view information indicates the coordinates of the center of the wide-view image being displayed on the communication terminal 30. The point-of-view information is transmitted from the communication terminal 30 that makes an image capturing request. The point-of-view information may include information designating the width and height of the display range, in addition to the radius vector, the polar angle, and the azimuth angle. Alternatively, the point-of-view information may include the width and height of the display range, instead of the radius vector, the polar angle, and the azimuth angle.

The item "imaging-time virtual room ID" represents identification information of a virtual room associated with the image capturing apparatus 10.

The item "storage location information of data" represents a URL, a file path, or the like of a location where a wide-view image is stored.

FIG. 14B is also an illustration of image management information. In FIG. 14B, wide-view images having the same imaging-time virtual room ID are stored. The image management information may be classified in units of virtual rooms.

### Virtual Room Information Storage Unit 5002

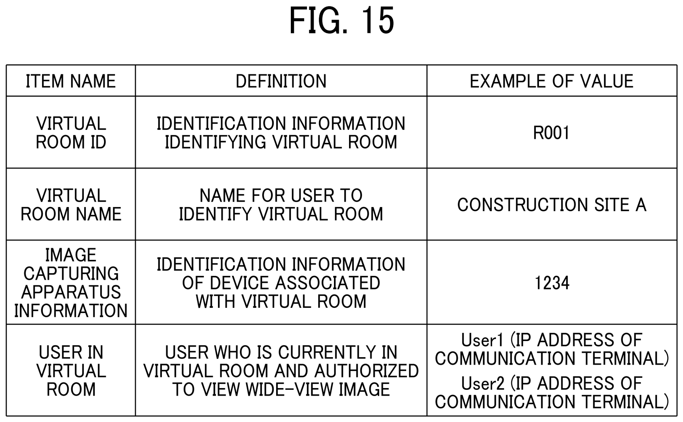

FIG. 15 is an illustration of virtual room information stored in the virtual room information storage unit 5002. The virtual room information storage unit 5002 stores virtual room information as illustrated in FIG. 15. The virtual room information is information related to a virtual room. The virtual room information is held for each virtual room. The items included in the virtual room information will be described.

The item "virtual room ID" represents identification information that uniquely identifies a virtual room. In the present embodiment, each virtual room may be created by a user as appropriate.

The item "virtual room name" represents a name for a user to identify a virtual room. Each virtual room name may be set by the user as appropriate.

The item "image capturing apparatus information" represents identification information (image capturing apparatus ID) of the image capturing apparatus 10 associated with the virtual room.

The item "user in virtual room" represents the user ID of a user who has entered and is currently in the virtual room. The user is a user authorized to view a wide-view image. The method for entering a virtual room will be described below. The user ID is associated with the IP address of the communication terminal 30 operated by the user.

### Participant Information Storage Unit 5003

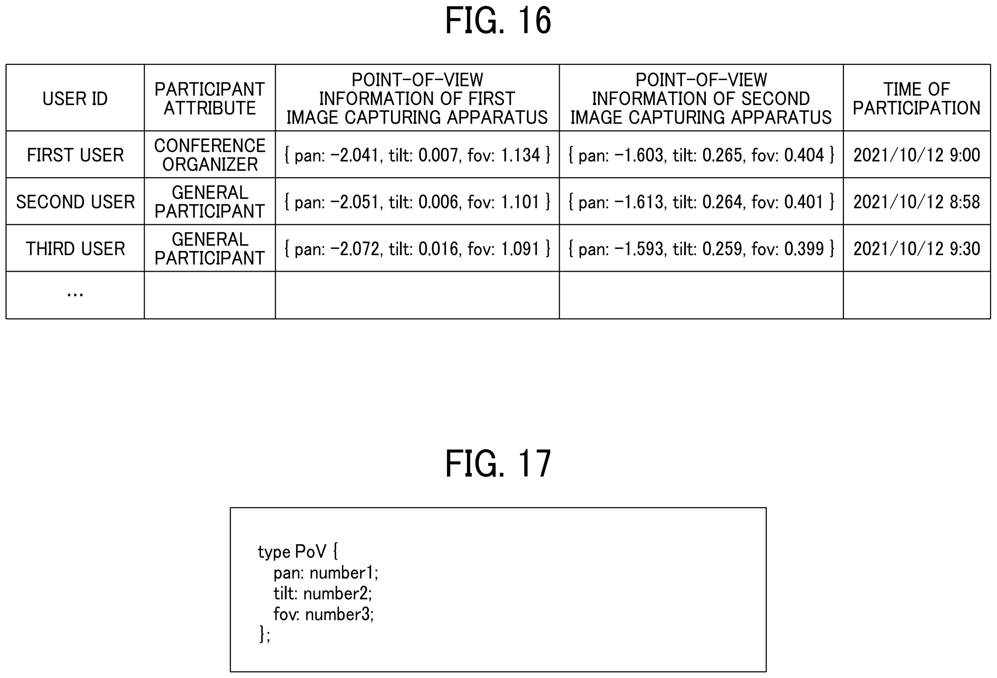

FIG. 16 is an illustration of point-of- view information stored in the participant information storage unit 5003 according to the present embodiment. The participant information storage unit 5003 stores participant information as illustrated in FIG. 16. The participant information is information related to a participant participating in an electronic conference and is held for each participant. The items included in the participant information will be described. In the present embodiment, the participant information storage unit 5003 is described in a context where up to two image capturing apparatuses can be associated with a virtual room.

The item "user ID" represents identification information that uniquely identifies a user.

The item "participant attribute" represents an attribute of a user participating in the electronic conference. Examples of participant attributes include "conference organizer" indicating a person who organizes the electronic conference, and "general participant" indicating a participant in the electronic conference. The participant attributes are not limited to "conference organizer" and "general participant" and may include any attributes such as "guest" and positions in workplaces.

The items "point-of-view information of first image capturing apparatus" and "point-of-view information of second image capturing apparatus" each represent information that can specify a range of the wide-view image that is being displayed on the display 306 of the communication terminal 30.

In the present embodiment, when the wide-view image is to be displayed, a virtual point of view is determined in advance. Thus, the range being displayed on the display 306 can be specified by defining a virtual point of gaze and a virtual viewing angle.

FIG. 17 is a diagram illustrating an example of a structure of point-of-view information according to the present embodiment. In the example illustrated in FIG. 17, a structure PoV indicating point-of-view information includes a pan, a tilt, and a field of view (fov). A combination of the pan and the tilt represents a virtual point of gaze, and the fov represents a virtual viewing angle. Accordingly, a range of the wide-view image that is being displayed on the display 306 can be specified by the structure PoV.

The pan is a numerical value ("number1") indicating a horizontal angle. The pan is expressed in radians and is defined in the range of -2π to +2π.

The tilt is a numerical value ("number2") indicating a vertical angle. The tilt is expressed in radians and is defined in the range of -2π to +2π.

The fov is a numerical value ("number3") indicating a viewing angle. The fov is expressed in radians and is defined in the range of, for example, 100/180*π.

Referring back to FIG. 16, each of the "point-of-view information of first image capturing apparatus" and "point-of-view information of second image capturing apparatus" stores information indicated by the structure PoV. In the present embodiment, the structure PoV is used as an example of point-of-view information, by way of example, but not limitation. Any other data that can specify the displayed range may be used.

The item "time of participation" represents a time when the user starts participating in the electronic conference.

### Entry of Communication Terminal into Virtual Room

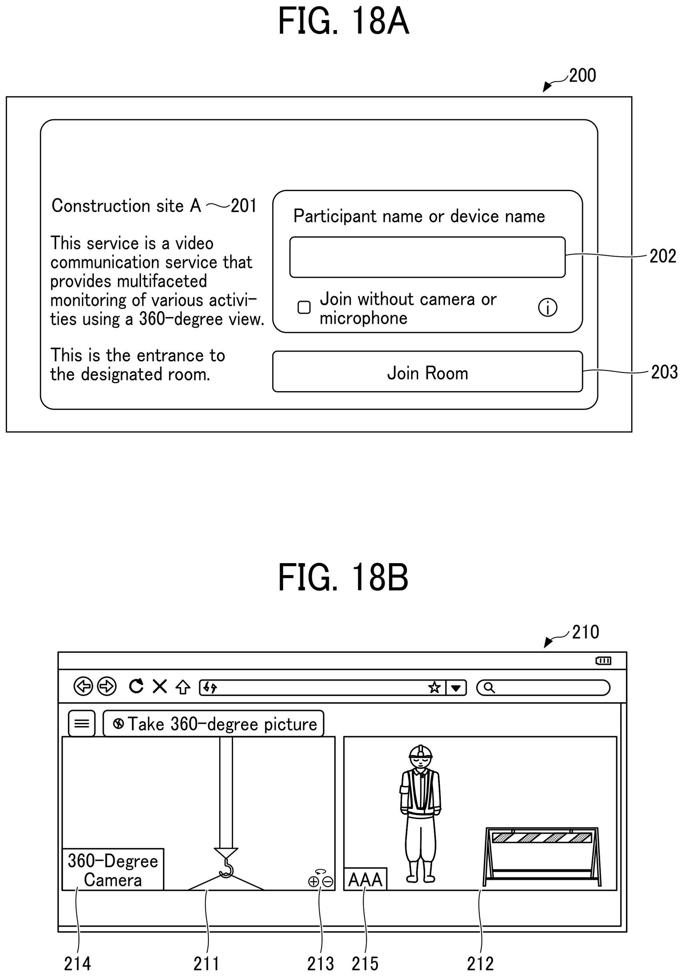

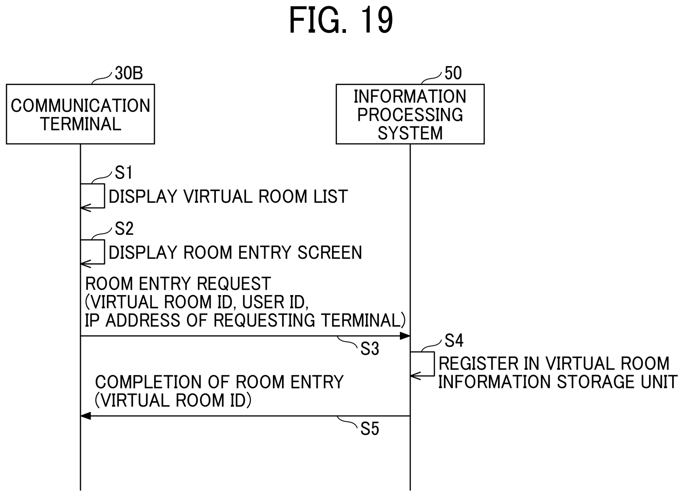

Next, a process in which the user B enters a virtual room will be described with reference to FIGs. 18A, 18B, and 19. In the illustrated example, the image capturing apparatus 10 has already been associated with the virtual room, and the communication terminal 30A has transmitted a wide-view image and an image having a normal angle of view to the information processing system 50. In the following description, no distinction is made between the entry of the user B into the virtual room and the entry of the communication terminal 30B, which is operated by the user B, into the virtual room.

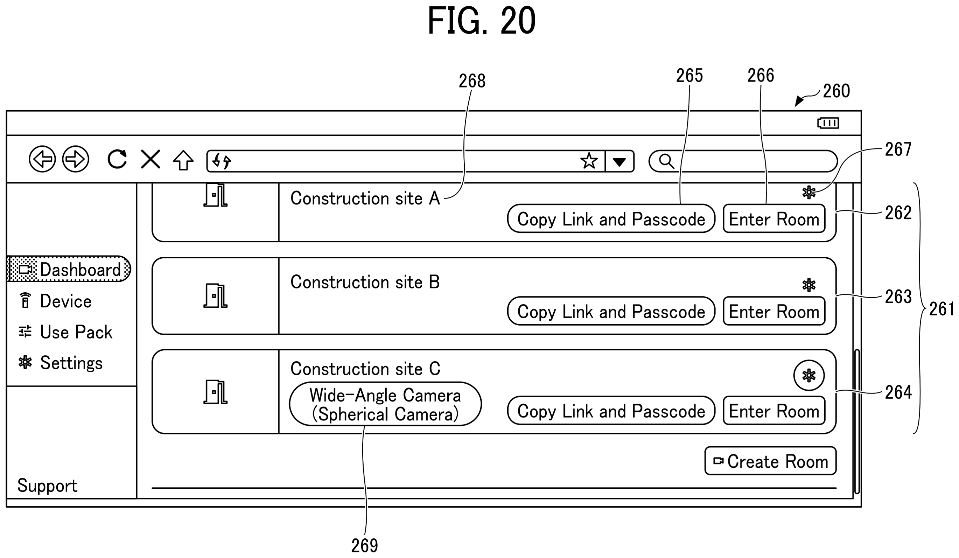

FIGs. 18A and 18B illustrate example screens displayed on the communication terminal 30B when the user B is to enter the virtual room. FIG. 18A illustrates an example of a room entry screen 200. Prior to the display of the room entry screen 200, the user B logs in to the information processing system 50. The information processing system 50 causes a list of virtual rooms to be displayed on the communication terminal 30B (see FIG. 20), and the user B selects a virtual room that the user B enters from the list. FIG. 18A illustrates the room entry screen 200 for the virtual room selected by the user B.

Alternatively, the creator of the virtual room may request the information processing system 50 to issue a URL corresponding to the virtual room, and the URL may be transmitted to the user B via email or any other means. In response to the user B clicking the URL displayed on the communication terminal 30B, the communication terminal 30B displays the room entry screen 200 illustrated in FIG. 18A.

The room entry screen 200 includes a virtual room name 201, a participant name input field 202, and a room entry button 203. The virtual room name 201 is the same as that stored in the virtual room information storage unit 5002. The participant name input field 202 may include a name such as a nickname of the user B. Upon the login of the user B, the user name of the user B is identified. The identified user name may be automatically displayed. The room entry button 203 is a button for the user B to send a request to enter the virtual room.

In some cases, when the user B enters the virtual room, the image capturing apparatus 10 may have already started distribution of a wide-view image, and the communication terminal 30A may have already started distribution of an image having a normal angle of view.

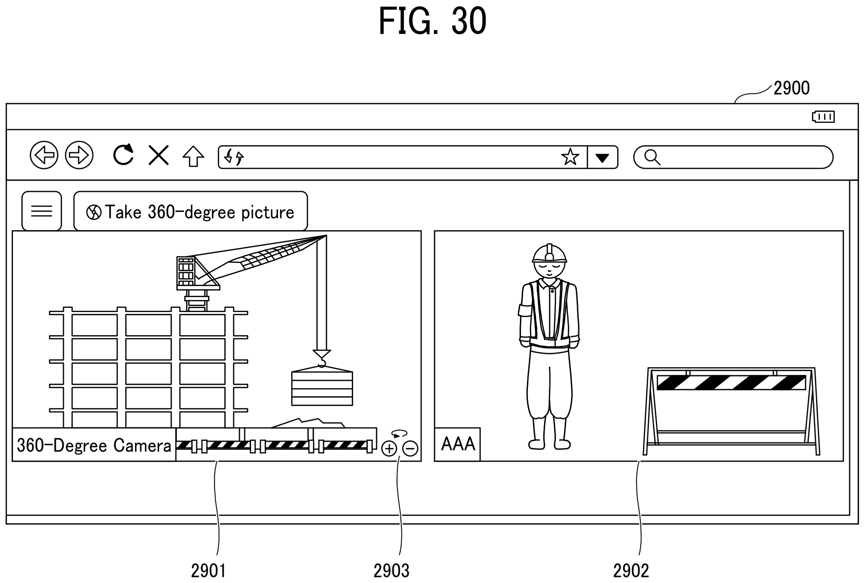

FIG. 30 is a diagram illustrating an example of an image viewing screen 2900 of the related art when the user B enters a virtual room halfway through. The image viewing screen 2900 illustrated in FIG. 30 indicates that the image capturing apparatus 10 has already started distribution of a wide-view image and that the communication terminal 30A has already started distribution of an image having a normal angle of view. Accordingly, the image viewing screen 2900 includes a first image area 2901 and a second image area 2902.

The first image area 2901 displays a wide-view image mark 2903. In a case where an operation corresponding to the wide-view image mark 2903 is accepted, the range displayed in the first image area 2901 can be changed.

In the related art, when the user B enters the virtual room halfway through, a predetermined initial display range of the wide-view image is displayed in the first image area 2901.

If the user A has already entered the virtual room and has performed an operation for changing the range displayed in the first image area 2901, the first image area displayed to the user A displays content different from that displayed in the first image area 2901 displayed to the user B.

When the user A is in conversation while referring to the first image area in which the range has been changed, it is difficult for the user B to identify what range of the wide-view image the user A is referring to.

In the related art, therefore, the user B may interrupt the user A in conversation to check which position the user A is viewing in order to adjust the currently displayed range of the wide-view image.

Even when a function that enables a point of view displayed to the user B to be synchronized with a point of view of the user A through an operation of the user A is provided, the user A may fail to perform the operation for synchronization if the user A is not aware of later participation of the user B during the ongoing communication.

Accordingly, the communication system 1 according to the present embodiment performs control to allow the user B, who is a later-participating user, to view substantially the same range of the wide-view image as a range displayed in a first image area of an image viewing screen displayed to a participating user (e.g., the user A).

FIG. 18B illustrates an image viewing screen 210 displayed on the communication terminal 30B in response to the user B entering the virtual room. The image viewing screen 210 illustrated in FIG. 18B indicates that the image capturing apparatus 10 has already started distribution of a wide-view image and that the communication terminal 30A has already started distribution of an image having a normal angle of view.

Accordingly, the image viewing screen 210 includes a first image area 211 and a second image area 212. The first image area 211 displays the wide-view image, and the second image area 212 displays the image having a normal angle of view. In one example, images are transmitted from three or more sites. The image viewing screen 210 is divided into a number of portions corresponding to the number of sites from which images are transmitted.

The first image area 211 displays a wide-view image mark 213. The wide-view image mark 213 is set by the screen generation unit 52 of the information processing system 50 based on a determination that the image to be displayed in the first image area 211 is a wide-view image. The determination may be made by the communication terminal 30B, and the communication terminal 30B may display the wide-view image mark 213. The wide-view image mark 213 allows the user B to know that the point of view can be changed. The first image area 211 also displays a device name 214. The device name 214 is transmitted from the image capturing apparatus 10 together with the wide-view image. The device name 214 may be set by, for example, the user A.

The first image area 211 presented to the user B, who is a later-participating user, displays video of the same range as that of the first image area of the image viewing screen on the communication terminal 30A of the user A. A processing procedure until video of the same range is displayed will be described below.

In the example illustrated in FIG. 18B, the user A is in conversation while checking whether there is a problem in slinging with a hook crane, by way of example. By referring to the first image area 211, the user B can identify where the user A is viewing while the user A is in conversation. Thus, the user B can easily join the conversation.

The second image area 212 displays a participant name 215. The participant name 215 is a user name. The participant name of a user who has already entered the virtual room is displayed in the participant name input field 202. In the illustrated example, since the user A has already entered the virtual room, "AAA", which is entered by the user A in the participant name input field 202, is displayed as the participant name 215.

FIG. 19 is a sequence diagram illustrating a process in which the user B (or the communication terminal 30B) enters the virtual room.

S1: First, the user B at the site B performs an operation for displaying a virtual room list screen. In response to the acceptance unit 32 accepting the operation for displaying the virtual room list screen, the display control unit 33 of the communication terminal 30B causes the display 306 to display a selection screen.

S2: In response to the user B selecting a selection button for one of the virtual rooms, the acceptance unit 32 of the communication terminal 30B accepts the selection of the virtual room. The display control unit 33 of the communication terminal 30B causes the display 306 to display the room entry screen 200.

S3: The user B completes the items and then presses the room entry button 203. In response to the acceptance unit 32 accepting the pressing of the room entry button 203, the communication unit 31 of the communication terminal 30B transmits a request to the information processing system 50 to enter the virtual room. The request for entering the virtual room includes a virtual room ID indicating the virtual room selected in step S2, the user ID of the user B, who is a login user, and the IP address of the communication terminal 30B from which the request is transmitted.

S4: The communication unit 51 of the information processing system 50 receives the request for entering the virtual room. The virtual room control unit 56 registers the IP address and the user ID of the login user in the virtual room information identified by the virtual room ID in the virtual room information storage unit 5002.

S5: The communication unit 51 of the information processing system 50 transmits, to the communication terminal 30B, a notification of the completion of the entry to the virtual room. Thus, the communication unit 31 of the communication terminal 30B receives the notification of the completion of the entry to the virtual room.

### Association of Image Capturing Apparatus with Room

Next, an association of the image capturing apparatus 10 with a virtual room will be described with reference to FIGs. 20 to 22. The image capturing apparatus 10 may be associated with a virtual room using any method by the user A at the site A or any other person such as a system administrator.

FIG. 20 illustrates an example of a virtual room association screen 260 for associating the image capturing apparatus 10 with a virtual room. The same screen configuration may be used for the VR goggles 89 and the smart glasses 88. The virtual room association screen 260 includes a virtual room list 261. The virtual room list 261 displays individual virtual room fields 262 to 264, based on virtual rooms. Each of the individual virtual room fields 262 to 264 includes a link issuance button 265, a room entry button 266, a settings button 267, and a virtual room name 268. The link issuance button 265 is a button for issuing a link (a URL for invitation) to the corresponding virtual room and a passcode. The room entry button 266 is a button for the user A to enter the virtual room. The settings button 267 is a button for associating the image capturing apparatus 10 with the virtual room. The virtual room name 268 is the same as that stored in the virtual room information storage unit 5002. The user A presses the settings button 267. In response to the pressing of the settings button 267, the communication terminal 30A displays a virtual room association screen 270.

If a device has already been associated with the virtual room, a name 269 of the device is displayed in the individual virtual room field (in FIG. 20, the individual virtual room field 264).

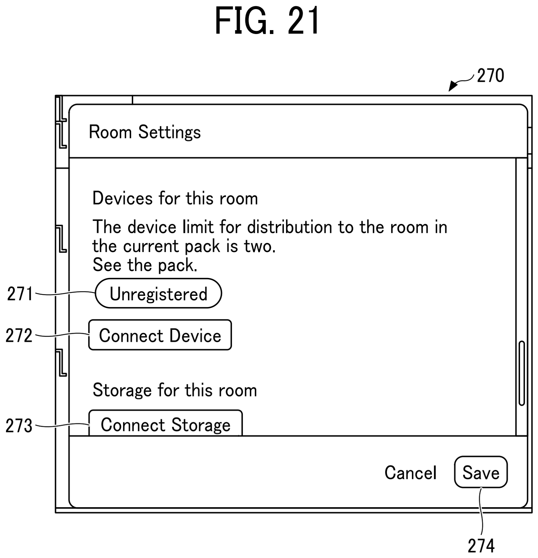

FIG. 21 illustrates an example of the virtual room association screen 270. The virtual room association screen 270 is displayed as a pop-up on the virtual room association screen 260. The screen transition from the virtual room association screen 260 to the virtual room association screen 270 is not made through the information processing system 50. In another example, the screen transition from the virtual room association screen 260 to the virtual room association screen 270 may be made through the information processing system 50.

The virtual room association screen 270 includes a name 271 of the image capturing apparatus 10 that is currently associated with the virtual room, a connection button 272, a storage button 273, and a "Save" button 274. In FIG. 21, the name 271 is set as "unregistered" because the image capturing apparatus 10 is not registered yet. The connection button 272 is a button for displaying a list of devices registered in the virtual room. The storage button 273 is a button for displaying a list of external storages 90 to store a wide-view image captured by the image capturing apparatus 10 associated with the virtual room. In response to the pressing of the connection button 272, the communication terminal 30A displays a virtual room association screen 280.

The communication terminal 30A transmits a virtual room ID to the information processing system 50 and acquires the name (or ID) of a device registered in the virtual room for which the virtual room is generated and the name (or ID) of a device associated with the virtual room.

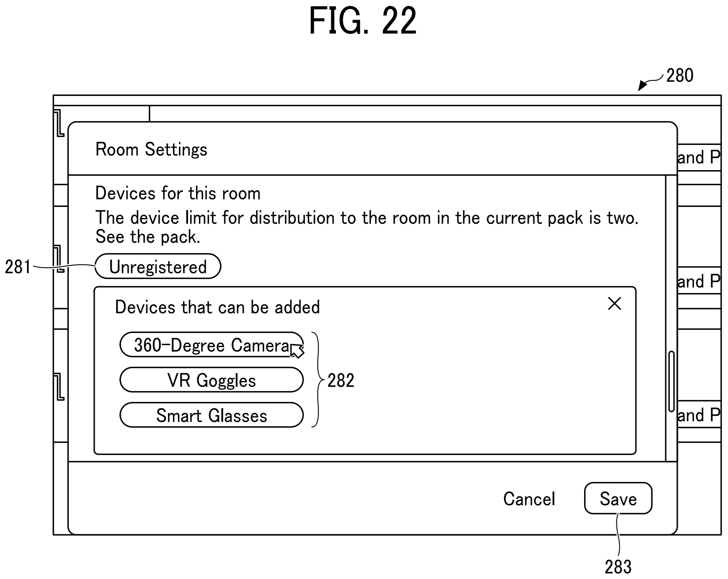

FIG. 22 illustrates an example of the virtual room association screen 280. The virtual room association screen 280 includes a name 281 of the image capturing apparatus 10 that is currently (or has already been) associated with the virtual room, a list of devices 282 that can be added, and a "Save" button 283. The user A selects a device to be associated with the virtual room from the list of devices 282 that can be added and then presses the "Save" button 283. As a result, the selected device is associated with the virtual room. That is, the corresponding image capturing apparatus ID is registered in the virtual room information storage unit 5002.

### Wide-View Image Transmission Start Process for Image Capturing Apparatus

In the way described above, a device such as the image capturing apparatus 10 is associated with the virtual room. The user A operates the device to start transmitting an image.

For the VR goggles 89 and the smart glasses 88, the user A operates the device main body to turn on or off the transmission of an image. This is because no application dedicated to the communication system 1 is currently operating on the VR goggles 89 or the smart glasses 88. If an application dedicated to the communication system 1 operates on the VR goggles 89 and the smart glasses 88, the user A can also remotely turn on or off the transmission of an image.

For the image capturing apparatus 10, when the application is enabled, the user A can turn on or off the transmission of a wide-view image from the menu of the application after entering the virtual room.

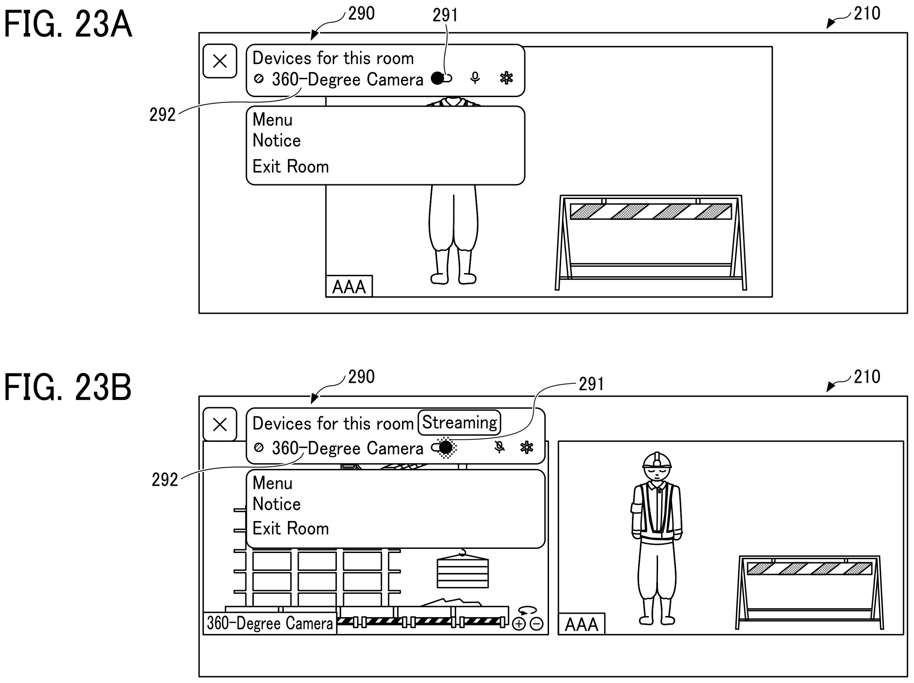

FIGs. 23A and 23B illustrate examples of a wide-view image transmission start/stop dialog 290 displayed on the communication terminal 30A. The wide-view image transmission start/stop dialog 290 is displayed as a pop-up on the image viewing screen 210. In the illustrated example, the user A has operated the communication terminal 30A and entered a virtual room associated with the image capturing apparatus 10. The wide-view image transmission start/stop dialog 290 displays a name 292 of the image capturing apparatus 10 associated with the virtual room. A toggle button 291 is displayed near the name 292. In one example, the user A operates the toggle button 291 to turn on or off the transmission of the wide-view image captured by the image capturing apparatus 10. Turning on or off the transmission of the wide-view image using a toggle button is merely an example, and any other method based on user operation input may be used. For example, a radio button or a predetermined icon may be selected, or a menu operation may be performed. Alternatively, the transmission of the wide-view image may be started automatically, without using a user operation, after the image capturing apparatus 10 enters the room. In another example, a predetermined condition such as the date and time, the number of users who have entered the room, or the participation of a specific user is determined in advance, and the transmission of the wide-view image is started based on a determination that the predetermined condition is satisfied.

The communication terminal 30A transmits the state of the toggle button 291 to the information processing system 50. The information processing system 50 transmits a transmission start request or a transmission stop request corresponding to the state of the toggle button 291 to the image capturing apparatus 10.

FIG. 23A illustrates an off state of the toggle button 291. In FIG. 23A, thus, the wide-view image is not displayed. By contrast, the image having a normal angle of view captured by the image capturing apparatus 9 of the communication terminal 30A is displayed in the image viewing screen 210 in FIG. 23A since the image having a normal angle of view has already been shared at the time of entry of the communication terminal 30A into the virtual room.

FIG. 23B illustrates an on state of the toggle button 291. In response to turning on of the toggle button 291, the information processing system 50 transmits a transmission start request to the image capturing apparatus 10. Accordingly, the image capturing apparatus 10 starts transmitting the wide-view image. Since two images are shared in one virtual room, the image viewing screen 210 is divided into two areas.

### Procedure for Registering Image Capturing Apparatus in Virtual Room

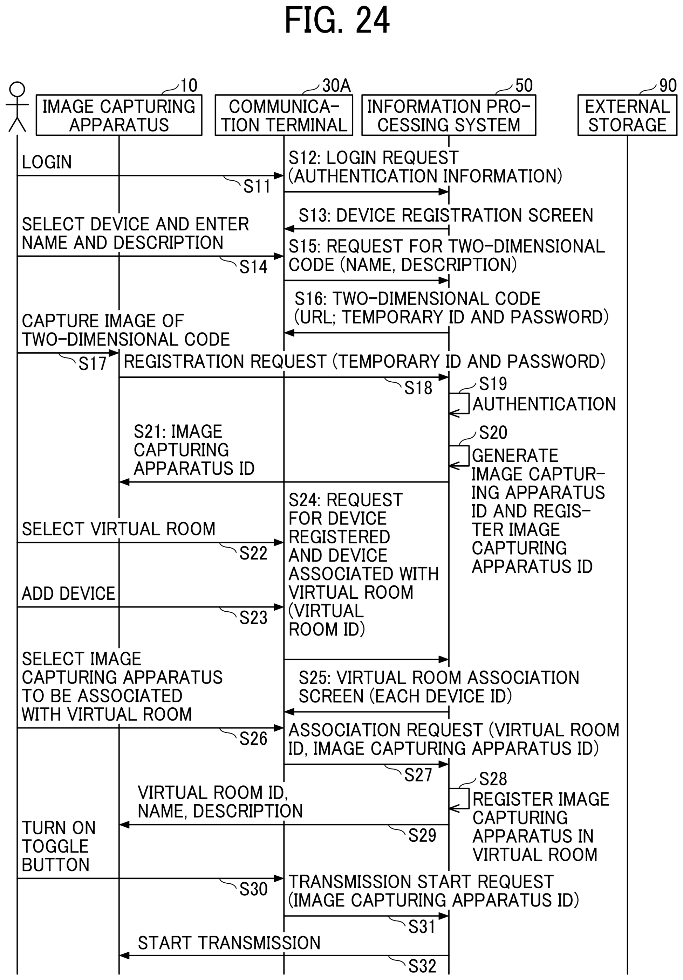

Next, a procedure for registering the image capturing apparatus 10 in the virtual room illustrated in the screen transitions will be described with reference to FIG. 24. FIG. 24 is a sequence diagram illustrating an example of a procedure in which the user A registers the image capturing apparatus 10 in the virtual room.

S11: First, the user A connects the communication terminal 30A to the information processing system 50 and enters authentication information (such as a user ID and a password) to make a login request to the virtual room to which the user A belongs. The acceptance unit 32 of the communication terminal 30A accepts the operation.

S12: The communication unit 31 of the communication terminal 30A designates the authentication information and transmits the login request to the information processing system 50. In the information processing system 50, the communication unit 51 receives the login request, and the authentication unit 55 performs authentication. It is assumed that the authentication has been successful.

S13: In the information processing system 50, the screen generation unit 52 generates a device registration screen in response to a user operation, and the communication unit 51 transmits screen information of the device registration screen to the communication terminal 30A.

S14: In the communication terminal 30A, the communication unit 31 receives the screen information of the device registration screen, and the display control unit 33 displays the device registration screen. The user A selects the type of the device (in the illustrated example, the image capturing apparatus 10). Then, the user A enters the name and description of the image capturing apparatus 10. The acceptance unit 32 receives the entered information.

S15: The communication unit 31 of the communication terminal 30A designates the name and description entered by the user A and transmits a request for a two-dimensional code to the information processing system 50.

S16: The communication unit 51 of the information processing system 50 receives the request for a two-dimensional code. The virtual room control unit 56 generates a URL (connection destination for registration) in association with the name and the description, and generates a two-dimensional code including the URL, a temporary ID, and a password. The communication unit 51 of the information processing system 50 transmits the two-dimensional code to the communication terminal 30A. In the communication terminal 30A, the communication unit 31 receives the two-dimensional code, and the display control unit 33 displays the two-dimensional code.

S17: The user A operates the image capturing apparatus 10 to be associated with the virtual room to capture an image of the two-dimensional code. The acceptance unit 12 of the image capturing apparatus 10 accepts the operation.

S18: In the image capturing apparatus 10, the imaging processing unit 13 performs an operation for capturing an image including the two-dimensional code to generate image data, and the analysis unit 14 analyzes the image data to extract the URL, the temporary ID, and the password. Accordingly, the registration request unit 15 connects to the URL via the connection unit 16, designates the temporary ID and the password, and transmits a request for registering the image capturing apparatus 10 to the information processing system 50.

S19: In the information processing system 50, the communication unit 51 receives the temporary ID and the password, and the authentication unit 55 determines whether the received temporary ID and password match the temporary ID and password associated with the connected URL. It is assumed that a match has been found.

S20: Since a request for registering the image capturing apparatus 10 has been made, the virtual room control unit 56 of the information processing system 50 generates an image capturing apparatus ID and registers the image capturing apparatus ID in the virtual room to which the user A has logged in. The image capturing apparatus ID is associated with a name and a description.

S21: The communication unit 51 of the information processing system 50 transmits the image capturing apparatus ID to the image capturing apparatus 10. The connection unit 16 of the image capturing apparatus 10 receives the image capturing apparatus ID and stores the image capturing apparatus ID in the storage unit 1000.

S22: The communication terminal 30A is notified of the completion of the registration, and, accordingly, the user A starts associating the image capturing apparatus 10 with the virtual room. The user A selects, on the virtual room association screen 260 displayed on the communication terminal 30A, a virtual room with which the image capturing apparatus 10 is to be associated. The acceptance unit 32 of the communication terminal 30A accepts the selection of the virtual room.

S23: The user A displays the virtual room association screen 270 on the communication terminal 30A and presses an "add device" button. The acceptance unit 32 of the communication terminal 30A accepts the pressing of the "add device" button.

S24: The communication unit 31 of the communication terminal 30A transmits to the information processing system 50 a request for devices registered in the virtual room and devices associated with the virtual room ID selected in step S22.

S25: In the information processing system 50, the communication unit 51 receives the request for the devices registered in the virtual room and the devices associated with the virtual room ID, and the screen generation unit 52 generates the virtual room association screen 280 including the device IDs of the devices registered in the virtual room and the devices associated with the virtual room ID. The communication unit 51 of the information processing system 50 transmits screen information of the virtual room association screen 280 to the communication terminal 30A.

S26: In the communication terminal 30A, the communication unit 31 receives the screen information of the virtual room association screen 280, and the display control unit 33 displays the virtual room association screen 280. The user A selects the image capturing apparatus 10 to be associated with the virtual room. The acceptance unit 32 of the communication terminal 30A accepts the selection of the image capturing apparatus 10, and the image capturing apparatus ID is identified.

S27: The communication unit 31 of the communication terminal 30A designates the virtual room ID selected in step S22 and the image capturing apparatus ID selected in step S26, and transmits an association request to the information processing system 50.

S28: In the information processing system 50, the communication unit 51 receives the association request, and the virtual room control unit 56 registers the image capturing apparatus 10 in the virtual room. That is, the virtual room control unit 56 registers the image capturing apparatus ID in the virtual room information storage unit 5002.

S29: Since the image capturing apparatus ID is associated with the virtual room, the communication unit 51 of the information processing system 50 transmits the virtual room ID, the name, and the description to the image capturing apparatus 10. The information processing system 50 may transmit the virtual room ID, the name, and the description to the image capturing apparatus 10 by using a push notification or by using polling, which is performed by the image capturing apparatus 10. The connection unit 16 of the image capturing apparatus 10 receives the virtual room ID, the name, and the description and stores the virtual room ID, the name, and the description in the storage unit 1000. Accordingly, the image capturing apparatus 10 can attach, for example, the image capturing apparatus ID, the virtual room ID, the name, and the description to a wide-view image to be transmitted.

S30: The communication terminal 30A is notified of the completion of the association, and, accordingly, the user A turns on the toggle button 291 for the image capturing apparatus 10 associated with the virtual room on the image viewing screen 210. The acceptance unit 32 of the communication terminal 30A accepts the turn-on operation.

S31: The communication unit 31 of the communication terminal 30A designates the image capturing apparatus ID and transmits, to the information processing system 50, a request for starting transmission of the wide-view image. The user A may directly operate a button of the image capturing apparatus 10 to start transmitting the wide-view image. In response to an operation performed by the user A, the communication unit 31 of the communication terminal 30A may transmit a transmission stop request to the information processing system 50.

S32: The communication unit 51 of the information processing system 50 receives the transmission start request and requests the image capturing apparatus 10 identified by the image capturing apparatus ID to start transmission. The information processing system 50 may use a push notification or use polling, which is performed by the image capturing apparatus 10. In the image capturing apparatus 10, the connection unit 16 receives the transmission start request, and the imaging processing unit 13 starts capturing a wide-view image. The image transmission control unit 18 repeatedly transmits the wide-view image with a determined frame rate (expressed in FPS) or a frame rate (expressed in FPS) corresponding to a bandwidth via the connection unit 16. As a result, the communication terminal 30 that has entered the virtual room can display the state of the site A on the image viewing screen 210 in real time.

### Distribution of Wide-View Image and Others

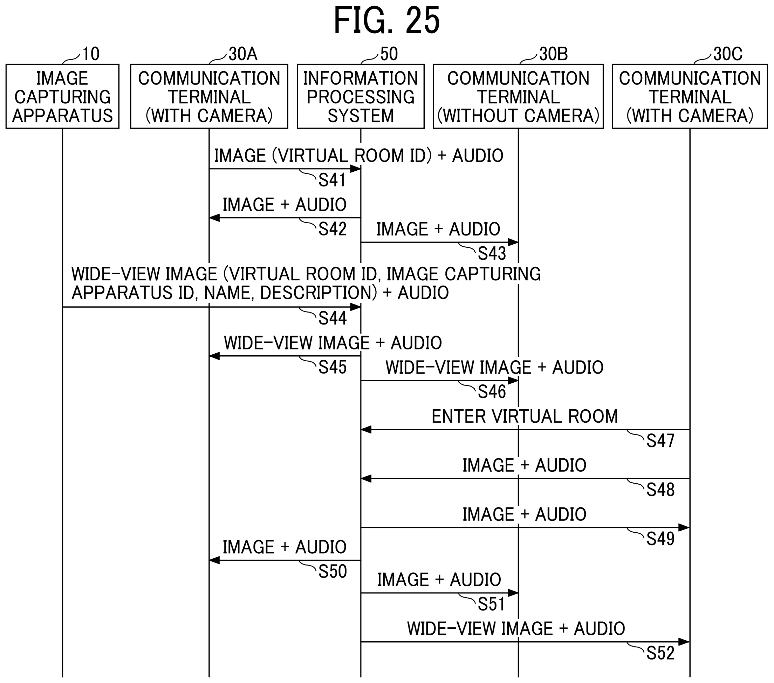

A process for sharing a wide-view image or an image having a normal angle of view will be described with reference to FIG. 25. FIG. 25 is a sequence diagram illustrating an example of a process for sharing a wide-view image. In FIG. 25, the communication terminals 30A and 30B have entered the virtual room. The communication terminal 30A includes the image capturing apparatus 9 having a normal angle of view, and an image captured by the image capturing apparatus 9 is shared with the communication terminal 30B. An image or the like captured by the smart glasses 88 associated with the virtual room, instead of the image capturing apparatus 9 of the communication terminal 30A, may be shared.

S41: In the communication terminal 30A, the imaging unit 34 repeatedly captures an image to obtain captured images, and the communication unit 31 designates the virtual room ID of the virtual room that the communication terminal 30A is in and repeatedly transmits the images and audio to the information processing system 50.

S42 and S43: In the information processing system 50, in response to the communication unit 51 receiving the images and the audio, the image distribution unit 54 acquires the IP addresses of the communication terminals 30A and 30B, which are in the virtual room, from the virtual room information storage unit 5002, and transmits the images and the audio via the communication unit 51. In FIG. 25, an image having a normal angle of view is received by the communication unit 31 of the communication terminal 30A from the information processing system 50 and is displayed. In another example, an image having a normal angle of view is not received from the information processing system 50, but an image having a normal angle of view is captured by the imaging unit 34 and is displayed.

S44: In the image capturing apparatus 10, in response to a transmission start request made by turning on the toggle button 291, the imaging processing unit 13 repeatedly captures a wide-view image to obtain captured wide-view images, and the image transmission control unit 18 designates the virtual room ID, the image capturing apparatus ID, the name, and the description and repeatedly transmits the wide-view images and audio to the information processing system 50 via the connection unit 16.

S45 and S46: In the information processing system 50, in response to the communication unit 51 receiving the wide-view images and the audio, the image distribution unit 54 acquires the IP addresses of the communication terminals 30A and 30B, which are in the virtual room, from the virtual room information storage unit 5002, and transmits the wide-view images and the audio via the communication unit 51.

S47: The communication terminal 30C including the image capturing apparatus 9 newly enters the virtual room.

S48: The communication unit 31 of the communication terminal 30C transmits an image having a normal angle of view and audio to the information processing system 50.

S49 to S51: In the information processing system 50, the communication unit 51 receives the image having a normal angle of view and the audio from the communication terminal 30C, and the image distribution unit 54 acquires the IP addresses of the communication terminals 30A to 30C, which are in the virtual room, from the virtual room information storage unit 5002, and transmits the image having a normal angle of view and the audio.

S52: The communication unit 51 of the information processing system 50 also transmits the wide-view images and the audio to the communication terminal 30C, which is in the same virtual room.

As described above, the users A and B, who are in the same virtual room, can share the wide-view images captured by the image capturing apparatus 10 associated with the virtual room. The order of transmission of the images illustrated in FIG. 25 is an example. In another example, the wide-view images may be shared first, or the images having a normal angle of view may be shared first.

A supplementary description will be given of the smart glasses 88 and the VR goggles 89. The smart glasses 88 have a camera having a normal angle of view and a display function. The camera of the smart glasses 88 captures an image having a normal angle of view, and the captured image having a normal angle of view is distributed in a manner similar to that for the image capturing apparatuses 8 and 9. The display function of the smart glasses 88 is implemented by a flat screen, like that of an ordinary display. Thus, part of a wide-view image is displayed from a point of view designated by the user. The VR goggles 89 have a display function. In one example, the VR goggles 89 may also include a camera having a normal angle of view. The display function of the VR goggles 89 projects a wide-view image with a point of view determined by the orientation of the head of the user wearing the VR goggles 89. Thus, part of the wide-view image is displayed from a point of view corresponding to the orientation of the head of the user. While viewing a wide-view image with the smart glasses 88 or the VR goggles 89, the user can transmit, to the information processing system 50, an image capturing request that designates point-of-view information of the wide-view image being viewed.

### Description of Later Participation in Electronic Conference

Next, later participation in an electronic conference will be described. In the present embodiment, by way of example, the user A organizes the electronic conference, and the user B participates as a general participant. The communication terminal 30A of the user A first starts participating in the electronic conference, and the communication terminal 30B of the user B starts participating in the electronic conference after the electronic conference has already started. The present embodiment describes participation in an electronic conference, by way of example, but not limitation. The present embodiment is applicable to any service that enables communication among a plurality of users (e.g., communication between the communication terminals 30A and 30B), and any of the users may join the ongoing service.

When the communication terminal 30A starts participating in the electronic conference, the communication unit 31 (an example of a first communication unit) of the communication terminal 30A receives a wide-view image captured by the image capturing apparatus 10. For this purpose, as illustrated in FIG. 23B, the user A operates the toggle button 291 in the wide-view image transmission start/stop dialog 290 to turn on the transmission of the wide-view image captured by the image capturing apparatus 10.

Accordingly, the display control unit 33 of the communication terminal 30A displays a predetermined initial display range of the received wide-view image in a first image area of the image viewing screen.

The acceptance unit 32 (an example of a first acceptance unit) of the communication terminal 30A accepts an operation for specifying an area to be displayed among areas included in the wide-view image. For example, the acceptance unit 32 accepts a point-of-gaze change operation or a viewing-angle change operation. The point-of-gaze change operation is an operation for changing at least one of a horizontal direction ("pan") and a vertical direction ("tilt"). The viewing-angle change operation is an operation for changing a viewing angle ("fov").

The display control unit 33 (an example of a first display control unit) of the communication terminal 30A causes the display 306 to display the area specified through the operation accepted by the acceptance unit 32 and included in the wide-view image.

The communication unit 31 of the communication terminal 30A transmits point-of-view information that specifies the area being displayed on the display 306 to the information processing system 50.

As is understood, the communication terminal 30B of the user B also includes a communication unit 31 (an example of a second communication unit), an acceptance unit 32 (an example of a second acceptance unit), and a display control unit 33 (an example of a second display control unit), which can implement the respective functions described above.

When the communication terminal 30B starts participating in the electronic conference after the electronic conference has already started, the communication unit 31 of the communication terminal 30B receives the wide-view image captured by the image capturing apparatus 10 and also receives point-of-view information (an example of second point-of-view information) from the information processing system 50. The electronic conference is an example of a service for allowing communication among a plurality of communication terminals 30. The point-of-view information received by the communication unit 31 of the communication terminal 30B is desirably based on point-of-view information transmitted from the communication terminal 30A already participating in the electronic conference (an example of communication), and may be the same as the point-of-view information transmitted from the communication terminal 30A.

The display control unit 33 of the communication terminal 30B causes the display 306 to display an area of the received wide-view image that is specified by the received point-of-view information (an example of second point-of-view information).

Accordingly, even in a case where the user B joins the ongoing electronic conference, the user B can view the wide-view image with the same point of view as the user A. A more detailed process flow will now be described.

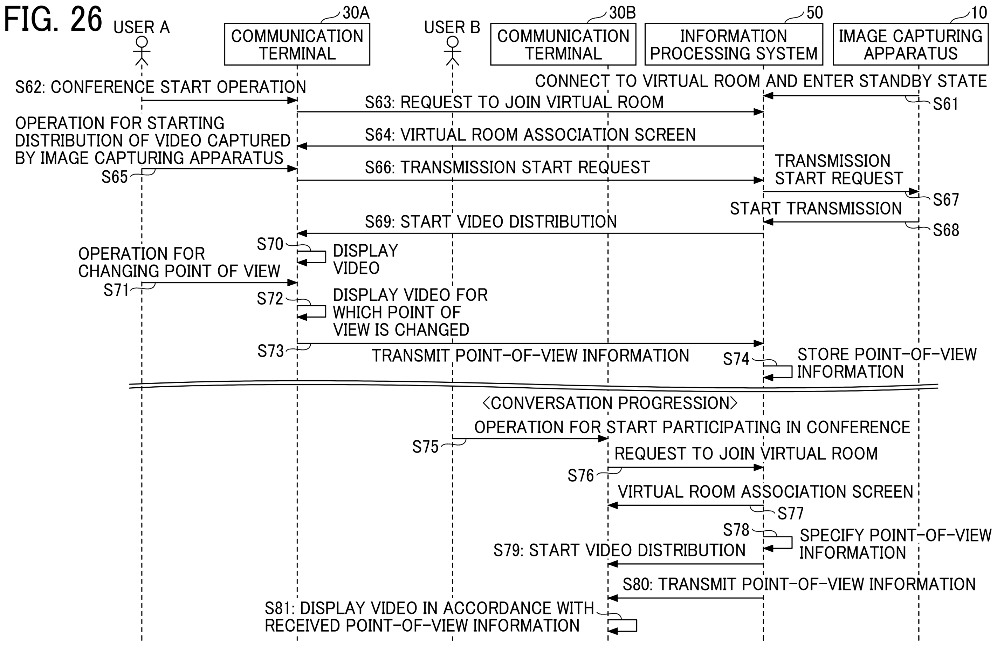

FIG. 26 is a sequence diagram illustrating a processing procedure performed in the communication system according to the present embodiment in a case where the users A and B start participating in an electronic conference.

S61: The image capturing apparatus 10 transmits the serial ID of the device to the information processing system 50 in order to connect to a virtual room provided by the information processing system 50, and enters a standby state.

S62: The acceptance unit 32 of the communication terminal 30A accepts an operation performed by the user A on the communication terminal 30A to start the electronic conference.

S63: The communication unit 31 of the communication terminal 30A transmits a participation (or entry) request to the information processing system 50 to join (or enter) the virtual room. Information to be transmitted in the participation (or entry) request is as described above.

S64: In response to receipt of the participation (or entry) request, the communication unit 51 of the information processing system 50 transmits the virtual room association screen 260 (see FIG. 20) to the communication terminal 30A after the user ID and the IP address of the communication terminal 30A that is logging in are registered in virtual room information specified by a virtual room ID in the virtual room information storage unit 5002.

Accordingly, the display control unit 33 of the communication terminal 30A displays the received virtual room association screen 260. The communication terminal 30A enters the virtual room in which the electronic conference is to be held when the acceptance unit 32 of the communication terminal 30A accepts pressing of the room entry button 266 associated with the virtual room on the virtual room association screen 260.

S65: After the entry into the virtual room in which the electronic conference is to be held, the acceptance unit 32 of the communication terminal 30A accepts an operation for starting distribution of video captured by the image capturing apparatus 10. For example, the acceptance unit 32 accepts an operation for turning on the transmission of a wide-view image by using the toggle button 291 displayed in the wide-view image transmission start/stop dialog 290 on the image viewing screen 210 (see FIG. 23B).

S66: The communication unit 31 of the communication terminal 30A transmits a request to start transmission of the wide-view image to the information processing system 50.

S67: The communication unit 51 of the information processing system 50 transmits a transmission start request to the image capturing apparatus 10.

S68: In response to receipt of the transmission start request, the communication unit 11 of the image capturing apparatus 10 starts transmission of the wide-view image to the information processing system 50.

S69: The communication unit 51 of the information processing system 50 starts distribution of video indicating the wide-view image to the communication terminal 30A that has entered the virtual room to which the image capturing apparatus 10 is connected.

S70: The display control unit 33 of the communication terminal 30A causes the display 306 to display the received video, more specifically, a predetermined initial display range of the wide-view image.

S71: The acceptance unit 32 of the communication terminal 30A accepts an operation for changing the point of view or the like to change the currently displayed range of the wide-view image.

S72: The display control unit 33 of the communication terminal 30A causes the display 306 to display the wide-view image in which the displayed range has been changed in accordance with the accepted operation for changing the point of view or the like.

S73: The communication unit 31 of the communication terminal 30A transmits point-of-view information for specifying the changed range to the information processing system 50.

S74: The storing/reading unit 59 of the information processing system 50 stores the received point-of-view information in the participant information storage unit 5003 in association with the user A. Thereafter, after the electronic conference progresses in the virtual room, the user B starts participating in the ongoing electronic conference.

S75: The acceptance unit 32 of the communication terminal 30B accepts an operation performed by the user B on the communication terminal 30B to start participating in the electronic conference.

S76: The communication unit 31 of the communication terminal 30B transmits a participation (or entry) request to the information processing system 50 to join (or enter) the virtual room.

S77: In response to receipt of the participation (or entry) request, the communication unit 51 of the information processing system 50 transmits the virtual room association screen 260 (see FIG. 20) to the communication terminal 30B after the user ID and the IP address of the communication terminal 30B that is logging in are registered in the virtual room information specified by the virtual room ID in the virtual room information storage unit 5002.

Accordingly, the display control unit 33 of the communication terminal 30B displays the received virtual room association screen 260. The communication terminal 30B enters the virtual room in which the electronic conference is being held when the acceptance unit 32 of the communication terminal 30B accepts pressing of the room entry button 266 associated with the virtual room on the virtual room association screen 260.

S78: The specifying unit 61 of the information processing system 50 refers to the participant information storage unit 5003 and specifies point-of-view information for displaying the wide-view image on the communication terminal 30B. For example, the specifying unit 61 specifies point-of-view information transmitted from the communication terminal 30A.

S79: The communication unit 51 of the information processing system 50 starts distribution of video indicating the wide-view image to the communication terminal 30B.

S80: The communication unit 51 of the information processing system 50 transmits the specified point-of-view information to the communication terminal 30B.

S81: The display control unit 33 of the communication terminal 30B causes the display 306 to display video corresponding to the area specified by the received point-of-view information within the video indicated by the wide-view image.

The communication system 1 according to the present embodiment performs the control described above to allow an earlier-participating user and a later-participating user to share a point of view when referring to the wide-view image.

In some cases, when a certain user starts participating in an electronic conference after the electronic conference has already started, there is a plurality of participating users. In such cases, the specifying unit 61 specifies point-of-view information of the certain user, who is a later-participating user, based on point-of-view information of the plurality of participating users. A method for specifying the point-of-view information by the specifying unit 61 will now be described.

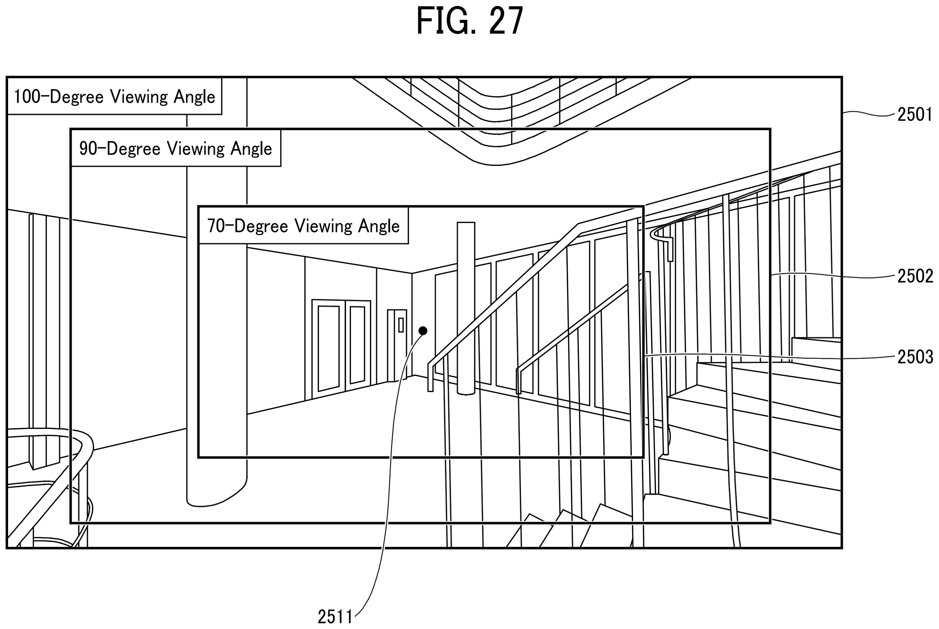

FIG. 27 is a diagram illustrating an example of ranges displayed on a plurality of communication terminals 30. In the example illustrated in FIG. 27, the same point of gaze 2511 is displayed on the plurality of communication terminals 30, whereas the viewing angles of the plurality of communication terminals 30 are different.

For example, a communication terminal 30A of a user A, who is an organizer, displays a range 2503, with a 70-degree viewing angle, of the wide-view image. A communication terminal 30C of a user C and a communication terminal 30D of a user D display a range 2502, with a 90-degree viewing angle, of the wide-view image. A communication terminal 30E of a user E displays a range 2501, with a 100-degree viewing angle, of the wide-view image.

Point-of-view information of the users A, C, D, and E is stored in the participant information storage unit 5003. The participant information storage unit 5003 also stores respective times of participation of the users A, C, D, and E. For example, the time of participation of the user A is "9:00", the time of participation of the user C is "9:00", the time of participation of the user D is "9:01", and the time of participation of the user E is "8:58".

The participant information storage unit 5003 also stores respective participant attributes of the users A, C, D, and E. For example, the user A is a conference organizer, and the users C, D, and E are general participants.

When a user B starts participating in the ongoing conference, the specifying unit 61 refers to the participant information storage unit 5003 and specifies point-of-view information to be transmitted to the user B, who is a later-participating user, based on a plurality of of point-of-view information, each received from a respective one of the plurality of communication terminals, namely, the communication terminals 30A, 30C, 30D, and 30E.

In one example, the specifying unit 61 specifies any one of the point-of-view information stored in the participant information storage unit 5003, based on the respective participant attributes of the plurality of participating users (or communication terminals). For example, the specifying unit 61 specifies point-of-view information corresponding to the range 2503 referred to by the user A, who is the "conference organizer" having the highest attribute.

In another example, the specifying unit 61 specifies any one of the point-of-view information stored in the participant information storage unit 5003, based on the respective times of participation of the plurality of participating users (or communication terminals). For example, the specifying unit 61 specifies point-of-view information corresponding to the range 2501 referred to by the user E with the earliest time of participation, namely, "8:58", or the user E who has first started participating in the electronic conference.

In another example, the specifying unit 61 specifies point-of-view information having the mode value among the point-of-view information stored in the participant information storage unit 5003. For example, the specifying unit 61 specifies point-of-view information corresponding to the range 2502 referred to by the largest number of users among the ranges 2503, 2502, and 2501.

In another example, the specifying unit 61 calculates a mean value of the point-of-view information stored in the participant information storage unit 5003 and specifies point-of-view information calculated as the mean value.

The specifying unit 61 specifies point-of-view information using any one of the methods for specifying point-of-view information described above. The method used actually may be determined in advance in the communication system 1 or may be selected by a user.

### Modification 1

The above embodiment illustrates an example in which the information processing system 50 specifies point-of-view information to be transmitted to a later-participating user, based on point-of-view information of an earlier-participating user. Modification 1 illustrates an example in which the specifying unit 61 uses a trained model to specify the point-of-view information.

The communication terminal 30 and the information processing system 50 have configurations similar to those in the embodiment described above.

When the communication terminal 30 starts participating in an electronic conference, the communication unit 31 of the communication terminal 30 transmits audio information on audio captured by the microphone 318 to the information processing system 50 in order to perform communication in the electronic conference.

The communication unit 51 of the information processing system 50 receives a wide-view image from the image capturing apparatus 10 and also receives audio information on speech made by a participating user in the electronic conference from the communication terminal 30 of the participating user.

The specifying unit 61 can use a first trained model and a second trained model. The first trained model and the second trained model may be incorporated in the information processing system 50 or may be incorporated in an external apparatus such as a cloud server.

For example, when image information is input as input information, the first trained model outputs the name and region of an object captured in an image indicated by the image information. In the first trained model, machine learning is performed using training data in which the image information is associated with the name and region of the object. Examples of the machine learning may include learning by backpropagation using a neural network. The name of an object is merely an example of information indicating the object, and any information indicating an object used in communication may be used.

For example, when audio information is input as input information, the second trained model outputs the name of an object included in audio indicated by the audio information. In the second trained model, machine learning is performed using training data in which the audio information is associated with the name of the object. Examples of the machine learning may include learning by backpropagation using a neural network.

In response to receipt of the wide-view image from the image capturing apparatus 10, the specifying unit 61 inputs the wide-view image to the first trained model, and accordingly receives the name and region of the object from the first trained model.

In response to receipt of the audio information from the communication terminal 30, the specifying unit 61 inputs the audio information to the second trained model, and accordingly receives the name of the object from the second trained model.

Further, the specifying unit 61 specifies, based on the name and region of the object received from the first trained model and the name of the object received from the second trained model, point-of-view information indicating a region where an object indicated by the name is captured, as point-of-view information to be transmitted to the communication terminal 30 of the later-participating user.

In Modification 1 of the present embodiment, by way of example, the first trained model is used to extract, from a wide-view image, the name and region of an object captured in the wide-view image. However, any method may be used instead of a method using the first trained model. Also, by way of example, the second trained model is used to extract, from audio information used for communication, information indicating an object identified based on a spoken word during the communication. However, any method may be used instead of a method using the second trained model.

The communication unit 51 of the information processing system 50 transmits the point-of-view information specified by the specifying unit 61 to the communication terminal 30 of the later-participating user. Subsequent processing is similar to that in the embodiment described above, and a description thereof will be omitted. In the communication system 1 according to the present embodiment, point-of-view information corresponding to a region of an object indicated by the content of an utterance made by an earlier-participating user during communication is transmitted to a later-participating user. Thus, the later-participating user can recognize the content of the communication.

### Modification 2

The above embodiment illustrates a case in which the information processing system 50 manages point-of-view information, by way of example, but not limitation. Modification 2 illustrates a case in which the communication terminal 30 manages point-of-view information.

In Modification 2, the communication terminal 30 is already participating in an electronic conference. In the communication terminal 30, each time the acceptance unit 32 accepts an operation for changing the point of view or the like, the storing/reading unit 35 stores point-of-view information indicating the changed point of view or the like in the storage unit 3300.

When another communication terminal 30 starts participating in the electronic conference after the electronic conference has already started, the communication unit 51 of the information processing system 50 notifies the communication terminal 30 already participating in the electronic conference of later participation of another communication terminal 30.

In the communication terminal 30 already participating in the electronic conference, in response to the communication unit 31 receiving the notification of later participation of another communication terminal 30, the storing/reading unit 35 reads point-of-view information from the storage unit 3300 and transmits the point-of-view information to the other communication terminal 30. The communication unit 31 may directly transmit the point-of-view information to the other communication terminal 30, or may transmit the point-of-view information to the other communication terminal 30 via the information processing system 50.

The above embodiment illustrates an example in which the information processing system 50 includes the specifying unit 61. However, in the present embodiment, for example, the communication terminal 30 instead of the information processing system 50 may include the specifying unit 61.

For example, the communication terminal 30 of the conference organizer includes the specifying unit 61, which is implemented by execution of a program. In this case, the communication terminal 30 of the conference organizer manages point-of-view information of all the communication terminals 30 participating in the electronic conference. For this reason, the communication unit 31 of the communication terminal 30 of the conference organizer receives point-of-view information from the other communication terminals 30 participating in the electronic conference. The storing/reading unit 35 of the communication terminal 30 stores the received point-of-view information in the storage unit 3300.

The specifying unit 61 of the communication terminal 30 of the conference organizer specifies point-of-view information to be transmitted to a later-participating user. The point-of-view information is specified using a method similar to that in the embodiment described above and Modification 1. In response to receipt of a notification of later participation of another communication terminal 30, the communication unit 31 of the communication terminal 30 of the conference organizer transmits the specified point-of-view information to the other communication terminal 30.

Accordingly, Modification 2 can achieve effects similar to those of the embodiment described above without causing the information processing system 50 to manage point-of-view information.

The communication system 1 according to the embodiments described above may be used in various fields. A specific application field will now be described.

### Application Example of Communication System in Telemedicine

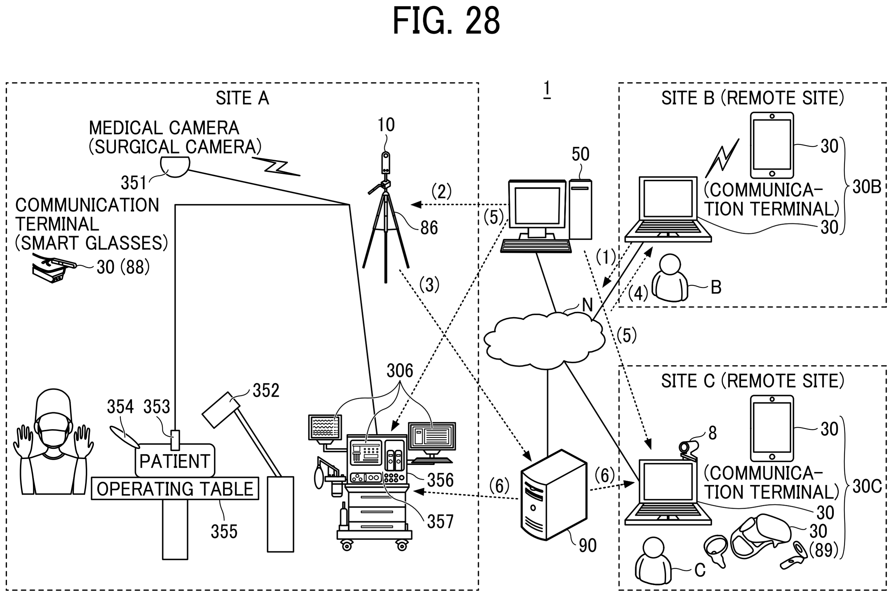

FIG. 28 is a diagram illustrating an example of remote communication using the communication system 1 in telemedicine. In the description of FIG. 28, differences from FIG. 1 will be described. In FIG. 28, the site A is an operating room. The processing steps (1) to (6) in FIG. 28 may be similar to those in FIG. 1. In FIG. 28, a patient is placed on an operating table 355 and is subjected to surgery by a medical professional such as a surgeon. The medical professional (corresponding to the user) operates on the patient with various surgical tools 354 such as forceps and a scalpel. The medical professional may wear the smart glasses 88 and transmit an image of the surgical field for surgery performed by the medical professional to the communication network N. Various cameras are placed in the operating room. Examples of the cameras include a surgical camera 351, a surgical field camera 352, and an endoscope 353. All of the cameras in the operating room and the smart glasses 88 are associated with a virtual room.

A main unit 356 is installed in the operating room. The main unit 356 monitors the vitals of a patient, the operating state of medical devices, and the like. The main unit 356 corresponds to the communication terminal 30 according to the embodiment described above. The communication terminal 30 (i.e., the main unit 356) in the operating room may have a function of receiving video from the endoscope 353 or the surgical field camera 352 in addition to the functions illustrated in FIG. 1. In one example, the communication terminal 30 displays the received video on displays 306 and transmits the video to the information processing system 50 as the video of the site at which the communication terminal 30 is located. An operation panel 357 is an input interface that accepts various operations. In one example, a medical professional operates a device in the operating room via the operation panel 357. The endoscope 353, the surgical camera 351, and the surgical field camera 352 may communicate with the information processing system 50 directly without the intervention of the communication terminal 30.

The communication terminal 30 may have the function of an electronic medical record system or the function of communicating with an electronic medical record system. The communication terminal 30 may display information on an electronic medical record on the display 306.

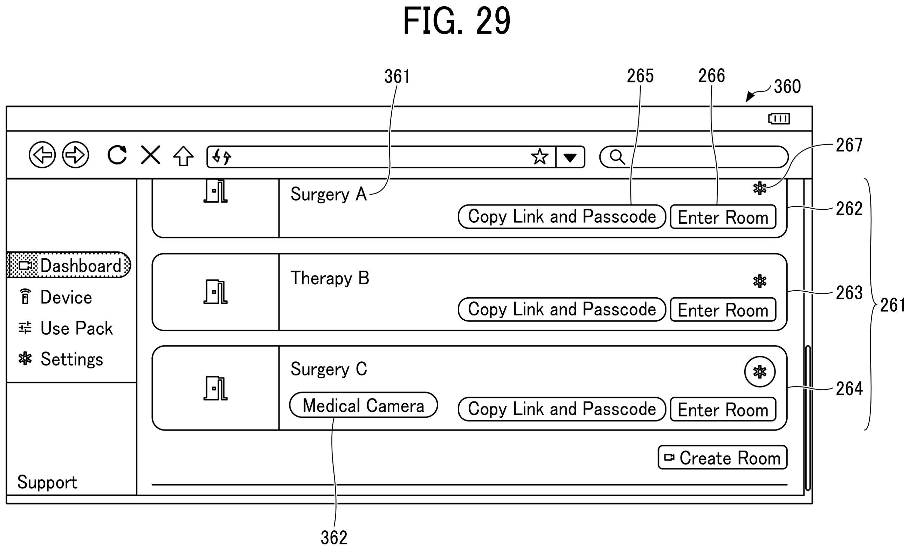

FIG. 29 is a diagram illustrating an example of a virtual room association screen 360 for associating an image capturing apparatus with a virtual room for telemedicine. In the description of FIG. 29, differences from FIG. 20 will be described.

In telemedicine, in one example, the virtual room association screen 360 displays a list of virtual rooms 361 associated with remote surgery or medical therapy. One of the virtual rooms 361 is associated with a medical camera 362 including a spherical camera. Examples of the medical camera 362 include an endoscope, a surgical field camera for use in capturing a surgical field image in an operating room, and a camera that captures a microscopic image.

In remote communication applied to telemedicine, as in the embodiment described above, a point of view of a wide-view image is shared with a user who starts participating in the remote communication after the remote communication has already started, thus allowing the user to easily understand the current situation.

In the example configurations such as that illustrated in FIG. 13, the information processing system 50, the image capturing apparatus 10, and the communication terminal 30 are divided according to main functions thereof to facilitate understanding of the processes performed by the information processing system 50, the image capturing apparatus 10, and the communication terminal 30. No limitation on the present disclosure is intended by how the functions are divided by process or by the name of the functions. The processing of each of the information processing system 50, the image capturing apparatus 10, and the communication terminal 30 may be divided into more units of processing in accordance with the content of the processing. Further, the division may be made such that each unit of processing includes more processing operations.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

The apparatuses or devices described in one or more embodiments of the present disclosure are merely examples of computing environments that can implement the embodiment disclosed herein. In some embodiments, the information processing system 50 includes multiple computing devices such as a server cluster. The multiple computing devices communicate with one another through any type of communication link including a network, shared memory, or the like and perform the processes disclosed herein.

Further, the information processing system 50 may be configured to share the processing steps disclosed herein, for example, the processing steps illustrated in FIGs. 24, 25, 26, and so on in various combinations. For example, a process executed by a predetermined unit may be executed by multiple information processing apparatuses included in the information processing system 50. The components of the information processing system 50 may be integrated into one server apparatus or divided into multiple apparatuses.

As described above, the communication system 1 according to an embodiment of the present disclosure enables a wide-view image to be displayed on a communication terminal of a user who starts participating in communication after the communication has already started, with consideration given to an area of the wide-view image that is being displayed on a communication terminal of a user already participating in the communication. This configuration enables a wide-view image to be displayed to a user who starts participating in a communication service such as an electronic conference after the communication service has already started, based on, for example, a point of view or the like of an earlier-participating user, and enables such a later-participating user to easily understand the content of the communication service.

In Aspect 1, a communication system includes a first information processing apparatus, a second information processing apparatus, and an information processing system. The first information processing apparatus and the second information processing apparatus are communicable with each other. The first information processing apparatus includes a first communication unit, a first acceptance unit, and a first display control unit. The first communication unit receives a wide-view image captured by an image capturing apparatus, in a case where the first information processing apparatus starts participating in the communication. The first acceptance unit accepts, from an operation unit, an operation for specifying a predetermined area included in the wide-view image. The first display control unit causes a first display unit to display the predetermined area specified through the operation accepted by the first acceptance unit. The information processing system includes a specifying unit and a third communication unit. The specifying unit extracts information indicating an object captured in the received wide-view image and a region of the object captured in the received wide-view image, further extracts information indicating the object from the communication, and specifies, based on an extraction result, point-of-view information indicating a region where the object indicated by the information is captured. The third communication unit transmits the point-of-view information specified by the specifying unit to the second information processing apparatus. The second information processing apparatus includes a second communication unit and a second display control unit. In a case where the second information processing apparatus starts participating in the communication after the communication has already started, the second communication unit receives the wide-view image captured by the image capturing apparatus, and the point-of-view information. The second display control unit causes a second display unit to display the predetermined area specified in the wide-view image by the received point-of-view information.

In Aspect 2, an information processing system includes a communication unit and a specifying unit. In a case where a plurality of information processing apparatuses participating in communication display a predetermined area specified through an accepted operation in a wide-view image captured by an image capturing apparatus, the communication unit receives, from the plurality of information processing apparatuses, a plurality of first point-of-view information each for specifying the predetermined area displayed by a respective one of the plurality of information processing apparatuses. The specifying unit specifies second point-of-view information, based on the plurality of first point-of-view information received from the plurality of information processing apparatuses. The communication unit transmits the specified second point-of-view information to an information processing apparatus that starts participating in the communication after the communication has already started.

In Aspect 3, a program causes a computer of an information processing apparatus to execute a process including: in a case where the information processing apparatus starts participating in communication with another information processing apparatus after the communication has already started, receiving a wide-view image captured by an image capturing apparatus and second point-of-view information, the second point-of-view information being based on first point-of-view information indicating a predetermined area specified in the wide-view image through an operation performed on the other information processing apparatus already participating in the communication; and causing a display unit to display the predetermined area specified by the received second point-of-view information in the wide-view image.

## Claims

1. A communication system (1) comprising:
a first information processing apparatus (30, 30A) to participate in communication; and
a second information processing apparatus (30, 30B) to participate in the communication,
the first information processing apparatus (30, 30A) including:
a first communication unit (31) configured to receive a wide-view image captured by an image capturing apparatus, in a case where the first information processing apparatus (30, 30A) starts participating in the communication;
a first acceptance unit (32) configured to accept, from an operation unit, an operation for specifying a predetermined area included in the wide-view image; and
a first display control unit (33) configured to cause a first display unit to display the predetermined area specified through the accepted operation, wherein
the first communication unit (31) is configured to transmit first point-of-view information for specifying the predetermined area after the operation is accepted,
the second information processing apparatus (30, 30B) including:
a second communication unit (31) configured to receive the wide-view image captured by the image capturing apparatus and second point-of-view information, in a case where the second information processing apparatus (30, 30B) starts participating in the communication after the communication has already started, the second point-of-view information being based on the first point-of-view information of the first information processing apparatus (30, 30A) participating in the communication; and
a second display control unit (33) configured to cause a second display unit to display the predetermined area specified by the received second point-of-view information in the wide-view image.

2. The communication system (1) according to claim 1, further comprising an information processing system (50), wherein
the first information processing apparatus (30, 30A) includes a plurality of first information processing apparatuses (30, 30A, 30C, 30D, 30E),
the information processing system (50) includes:
a third communication unit (51) configured to receive a plurality of first point-of-view information from the plurality of first information processing apparatuses (30, 30A, 30C, 30D, 30E); and
a specifying unit (61) configured to specify the second point-of-view information, based on the plurality of first point-of-view information received from the plurality of first information processing apparatuses (30, 30A, 30C, 30D, 30E), and
the third communication unit (51) is configured to transmit the specified second point-of-view information to the second information processing apparatus (30, 30B).

3. The communication system (1) according to claim 2, wherein
the specifying unit (61) is configured to specify, as the second point-of-view information, any one of:
a first point-of-view information included in the plurality of first point-of-view information and received from a first information processing apparatus (30, 30A) that has first started participating in the communication among the plurality of first information processing apparatuses (30, 30A, 30C, 30D, 30E);
a first point-of-view information specified from among the plurality of first point-of-view information received from the plurality of first information processing apparatuses (30, 30A, 30C, 30D, 30E), the specified first point-of-view information being based on attributes of the plurality of first information processing apparatuses (30, 30A, 30C, 30D, 30E);
a point-of-view information calculated as a mean value of the plurality of first point-of-view information received from the plurality of first information processing apparatuses (30, 30A, 30C, 30D, 30E); and
a point-of-view information calculated as a mode value of the plurality of first point-of-view information received from the plurality of first information processing apparatuses (30, 30A, 30C, 30D, 30E).

4. An information processing apparatus (30, 30B) comprising:
a communication unit (31) configured to, in a case where the information processing apparatus (30, 30B) starts participating in communication with another information processing apparatus (30, 30A) after the communication has already started, receive a wide-view image captured by an image capturing apparatus and second point-of-view information, the second point-of-view information being based on first point-of-view information indicating a predetermined area specified in the wide-view image through an operation performed on said another information processing apparatus (30, 30A) already participating in the communication; and
a display control unit (33) configured to cause a display unit to display the predetermined area specified by the received second point-of-view information in the wide-view image.

5. A display control method performed by an information processing apparatus, comprising:
in a case where the information processing apparatus starts participating in communication with another information processing apparatus after the communication has already started, receiving (S79, S80) a wide-view image captured by an image capturing apparatus and second point-of-view information, the second point-of-view information being based on first point-of-view information indicating a predetermined area specified in the wide-view image through an operation performed on said another information processing apparatus already participating in the communication; and
causing (S81) a display unit to display the predetermined area specified by the received second point-of-view information in the wide-view image.

6. Carrier means carrying computer readable code for controlling a computer system to carry out the method of claim 5.
